(19) Europäisches Patentamt
European Patent Office
Office européen des brevets

(11) **EP 2 439 905 B1**

(12) **EUROPEAN PATENT SPECIFICATION**

(45) Date of publication and mention
of the grant of the patent:
**05.06.2013 Bulletin 2013/23**

(51) Int Cl.:
***H04L 29/08*** *(2006.01)*    ***H04L 29/12*** *(2006.01)*

(21) Application number: **10186541.8**

(22) Date of filing: **05.10.2010**

(54) **Data channel set up latency reduction**

Verringerung der Datenkanalaufbaulatenz

Réduction de la latence de configuration de canaux de données

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.04.2012 Bulletin 2012/15**

(73) Proprietor: **Research In Motion Limited
Waterloo, ON N2L 3W8 (CA)**

(72) Inventors:
• **Go, Sunning Chun Ning
Waterloo, Ontario N2L 5Z5 (CA)**
• **Lewis, Allan David
Waterloo, Ontario N2L 5Z5 (CA)**
• **Preiss, Bruno Richard
Waterloo, Ontario N2L 5Z5 (CA)**

(74) Representative: **Patel, Binesh
Barker Brettell LLP
100 Hagley Road
Edgbaston
Birmingham
B16 8QQ (GB)**

(56) References cited:
**US-A- 5 239 678       US-A1- 2003 210 711
US-A1- 2006 159 098    US-A1- 2009 323 559**

**Description**

In many communications systems, when two devices wish to communicate with one another, a data channel is set up between them for such a purpose. Typically, there may be a considerable latency in establishing the data channel, which may inhibit communications.

This latency may manifest itself in the exchange of control messages along a control channel in accordance with a recognized communications protocol. Such latency may also arise from the exchange of control messages to establish higher level communications schemes along such a data channel, for example, to establish a secure communications link along the data channel.

Such latencies may be increased significantly where one or both of the devices is a mobile device.

U.S. Patent No. 5,239,678 discloses a method of converting a control channel for use as a communications channel. A central controller temporarily converts the control channel to a communications channel when all available communications channels are busy.

According to a first example embodiment there is disclosed a method for sending data from a first device to a second device over a network, comprising at the first device: sending at least one control message to the second device along a control channel prior to establishing a data channel between the first device and the second device; including some data from a data source in the at least one control message prior to establishing the data channel; and sending remaining data from the data source to the second device along the data channel once the data channel has been established.

In one example embodiment, the method may provide for assigning a file transfer identifier to the data source and including the file transfer identifier with the data included in the at least one control message.

In one example embodiment, the method may provide for including the file transfer identifier with the remaining data for reassembling the data source at the second device.

In one example embodiment, the method may provide for sending the at least one control message as part of a hole-punching protocol.

In one example embodiment, the method may provide for the first device being located behind a network address translation device and the first device exchanging at least one message with the associated network address translation device as part of the hole punching protocol.

In one example embodiment, the method may provide for including the data included in the at least one control message as payload data in the at least one control message along with public address information of the first device.

In one example embodiment, the method may provide for the first device obtaining public address information of the first device by exchanging at least one message with an associated STUN server in the network.

In one example embodiment, the method may provide for sending the at least one control message to establish the data channel.

In one example embodiment, the method may provide for encrypting the data included in the at least one control message with a temporary key; encrypting key information identifying the temporary key with a further key known only to the first device and second device; and sending the encrypted key information to the second device along the data channel, once the data channel has been established, for decrypting the data included in the at least one control message at the second device.

In one example embodiment, the method may provide for the further key being obtained by a Diffie-Hellman key exchange protocol.

According to a second example embodiment there is disclosed a first device for sending data to a second device over a network, the first device for: sending at least one control message to the second device along a control channel prior to establishing a data channel between the first device and the second device; including some data from a data source in the at least one control message prior to establishing the data channel; and sending remaining data from the data source to the second device along the data channel once the data channel has been established.

In one example embodiment, the first device may provide for the first device being a mobile device.

In one example embodiment, the first device may provide for including the data in the at least one control message as payload data in the at least one control message along with public address information of the first device.

In one example embodiment, the first device may provide for sending the at least one control message to establish the data channel.

In one example embodiment, the first device may provide for assigning a file transfer identifier to the data source and including the file transfer identifier with the data included in the at least one control message.

In one example embodiment, the first device may provide for including the file transfer identifier with the remaining data for reassembling the data source at the second device.

In one example embodiment, the first device may provide for encrypting the data included in the at least one control message with a temporary key; encrypting key information identifying the temporary key with a further key known only to the first device and second device; and sending the encrypted key information to the second device along the data channel, once the data channel has been established, for decrypting the data included in the at least one control message at the second device.

In one example embodiment, the first device may provide for the further key being obtained by a Diffie-Hellman key exchange protocol.

According to a third example embodiment there is disclosed a computer-readable medium in a first device for sending data to a second device over a network, the medium having stored thereon, computer-readable and computer-executable instructions which, when executed by a processor, cause the processor to perform actions comprising: sending at least one control message to the second device along a control channel prior to establishing a data channel between the first device and the second device; including some data from a data source in the at least one control message sent prior to establishing the data channel; and sending remaining data from the data source to the second device along the data channel once the data channel has been established.

In one example embodiment, the computer readable medium may cause the processor to perform actions comprising: encrypting the data included in the at least one control message with a temporary key; encrypting key information identifying the temporary key with a further key known only to the first device and second device; and sending the encrypted key information to the second device along the data channel, once the data channel has been established, for decrypting the data included in the at least one control message at the second device.

The embodiments of the present disclosure will now be described by reference to the following figures, in which identical reference numerals in different figures indicate identical elements and in which:

**FIGURE 1** is a block diagram illustrating the establishment of a data channel between a first device and a second device according to an example embodiment of the present disclosure;

**FIGURE 2A** is a block diagram showing example messages exchanged by the components of **Figure 1** to establish a data channel by hole punching;

**FIGURE 2B** is a table showing the format and contents of each of the example messages shown in **Figure 2A**;

**FIGURE 3A** is a block diagram showing example messages exchanged by the components of **Figure 1** to establish a data channel by hole punching with reduced set up latency according to example embodiments;

**FIGURE 3B** is a table showing the format and contents of each of the example messages shown in **Figure 3A;**

**FIGURE 4** is a flow chart showing example processing actions by one of the devices of **Figure 1** to reduce setup latency while establishing the data channel according to an embodiment of the present disclosure;

**FIGURE 5A** is a block diagram showing example messages exchanged by the components of **Figure 1** to establish an encrypted data channel by hole punching followed by Diffie-Hellman key exchange;

**FIGURE 5B** is a table showing the format and contents of each of the example messages shown in **Figure 5A**;

**FIGURE 6A** is a block diagram showing example messages exchanged by the components of **Figure 1** to establish an encrypted data channel by hole punching and Diffie-Hellman key exchange with reduced set up latency according to the example embodiments;

**FIGURE 6B** is a table showing the format and contents of each of the example messages shown in **Figure 6A; and**

**FIGURE 7** is a flow chart showing example processing actions by one of the devices of **Figure 1** to reduce set up latency while establishing the data channel and determining a shared encryption key for the data channel according to an embodiment of the present disclosure;

**FIGURE 8** is a graphical representation of a front view of an example mobile device for use in the example embodiment of **Figure 1**; and

**FIGURE 9** is a simplified block diagram of the example device of **Figure 8**.

The present disclosure will now be described in detail for the purposes of illustration only, in conjunction with certain embodiments shown in the enclosed drawings. A device capable of acting as the first or second device and implementing this method is also disclosed. According to various example embodiments, methods and devices are disclosed for reducing set up latency when establishing a data channel between two devices.

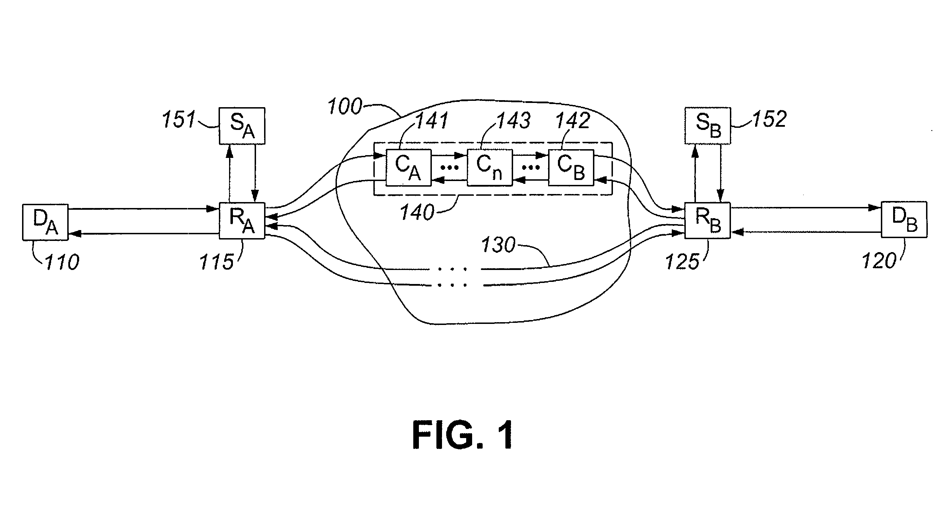

Turning now to **Figure 1**, there is shown a conceptual representation of an example scenario in which a first mobile device $D_A$ **110** and a second device $D_B$ **120** seek to establish a data channel within a network shown generally at **100**, for the exchange of one or more data packets, which may be associated with a data source to the second device along the data channel once the data channel has been established.

In the example embodiment of **Figure 1**, network **100** comprises a plurality of devices $D_A$ **110** $D_B$ **120**, routers $R_A$ **115**, $R_B$ **125**, one or more Simple Traversal of User Datagram Protocol (UDP) through NATs (STUN) servers $S_A$ **151**, $S_B$ **152**, a control channel **140** encompassing one or more control servers **141-143** and a data channel **130** extending between each device $D_A$ **110**, $D_B$ **120**. As shown in the non-limiting example of **Figure 1**, router $R_A$ **115**, control server $C_A$ **141** and STUN server $S_A$ **151** are associated with device $D_A$ **110,** while router $R_B$ **125,** control server $C_B$ **142** and STUN server $S_B$ **152** are associated with device $D_B$ **120**.

In at least some example embodiments, device $D_A$ **110** is a mobile communications device that may have a two-way electronic messaging communications capability and possibly also a voice communication capability. Depending on the functionality provided by the device **110,** in various embodiments, device $D_A$ **110** may be a wireless handset, a data communications device, a multiple-mode communications device configured for both data and voice communication, a mobile telephone, a pager, a personal digital assistant (PDA), which may be enabled for wireless communications, a personal entertainment device, a telecommunications device installed within a vehicle, a portable, laptop, notebook or tablet computer with a wireless modem or wireless network card, or a portable, laptop, notebook or tablet computer or a phone device with a fixed connection to a network, among other things. Many suitable devices may combine some or all of these functions. The device $D_A$ **110** may support specialized activities, such as gaming, inventory control, job control and task management functions and the like.

The device $D_A$ **110** may include a controller that includes at least one processor (not shown) or digital signal processor (not shown) or both for controlling the overall operation of the device $D_A$ **110.** The processor / DSP may interact with a communications subsystem (not shown) so as to give effect to the processing and exchange of messages described herein.

Device $D_B$ **120** may be a computer, including for example, a server, a personal computer or a second mobile device such as described above, among other things.

Device $D_A$ **110,** sends messages to router $R_A$ **115** and receives messages from router $R_A$ **115** and device $D_B$ **120** sends messages to router $R_B$ **125** and receives messages from router $R_B$ **125.**

The router $R_A$ **115** and router $R_B$ **125** are network address translation (NAT) devices that modify network address information in data packet headers. NAT devices or routers use translation tables to map addresses, such as private network addresses associated with a device behind the router, into a single IP address in a public address space, and rewrites an outgoing Internet Protocol (IP) address so that the address appears to originate from the router at the public address, building suitable translation tables in the process. Messages incoming from the network intended for the device behind the router are translated using the translation tables back into the originating IP address in the private network address space. NAT within the router thus obscures an internal network's structure and all traffic appears to outside parties as if the traffic originates from the router.

Because the router builds up the translation tables in the process of processing an outbound data packet (that is from the device behind the router to an address in the public address space serviced by the network), outbound messages should precede inbound messages. For security reasons, a router may keep track, in a translation table, of which external devices the device behind the router has sent packets to and will drop any received unsolicited packets, that is, packets received from an external device to which no packets have been previously sent by the device by the router. However, with the prevalence of NAT in modern computer networks, it is increasingly likely that both devices that wish to communicate with one another will be hidden behind a respective router.

Various techniques exist to establish communications between devices that are hidden behind respective routers. For example, both devices may establish a connection with one or more third-party servers that are unencumbered by routers, thus forming a control channel over the network that is immediately accessible. Control messages may be exchanged along the control channel **140** to establish, in accordance with a recognized communications protocol, a direct data channel, consisting of zero, one or more nodes in a communications network interposed between the routers associated with each device, along which messages may be exchanged between the devices.

Router $R_A$ **115,** among other things, may (a) forward STUN messages (described below) to STUN server $S_A$ **151** and receive STUN messages from STUN server $S_A$ **151,** (b) forward control messages to control server $C_A$ **141** for transmission along the control channel **140** to device $D_B$ **120** (through router $R_B$ **125**) and may receive control messages along the control channel **140** from control server $C_A$ **141** that emanate from device $D_B$ **120** (through router $R_B$ **125**), (c) forward data messages to router $R_B$ **125** along the data channel **130** (when established), for forwarding to device $D_B$ **120** and receive data messages from device $D_B$ **120** (through router $R_B$ **125**) along the data channel **130** (when established), and (d) forward messages to device $D_A$ **110** and receive messages from device $D_A$ **110.**

Messages received by router $R_A$ **115** from device $D_A$ **110** and intended for a node or device along the network **100** will contain public coordinates (*a', p'*) and private coordinates (*a, p*) in their respective destination and source message header fields, where, by way of non-limiting example, each set of coordinates comprises a data pair of an IP address *a* and a port number *p*. Router $R_A$ **115** replaces the private coordinates (*a, p*) associated with device $D_A$ **110** with public coordinates (*a', p'*) in the source message header field as part of the network address translation activity performed by router $R_A$ **115** and keeps track of the public coordinates assigned. Additionally, router $R_A$ **115** may maintain a list of public coordinates (*a', p'*) contained in the destination message header field of messages received from device $D_A$ **110** in a translation table so as to permit the transmission, back to device $D_A$ **110,** of messages having such coordinates as the source message header field.

Messages received by $R_A$ **115** from a node or device along the network **100** whose source message header field is on the translation table of router $R_A$ **115** will be forwarded by router $R_A$ **115** to device $D_A$ **110,** but with the public coordinates (*a', p'*) replaced by the private coordinates (*a, p*) associated with device $D_A$ **110** in the destination message header field.

Router $R_B$ **125** may, among other things: (a) forward STUN messages to STUN server $S_B$ **152** and receive STUN messages from STUN server $S_B$ **152**, (b) forward control messages to control server $C_B$ **142** for transmission along the control channel **140** to device $D_A$ **110** (through router $R_A$ **115**) and may receive control messages along the control channel **140** from control server $C_B$ **142** that emanate from device $D_A$ **110** (through router $R_A$ **115**), (c) forward data messages to router $R_A$ **115** along the data channel **130** (when established) for forwarding to device $D_A$ **110** and receive data messages from device $D_A$ **110** (through router $R_A$ **115**) along the data channel **130** (when established), and (d) forward messages to device $D_B$ **120** and receive messages from device $D_B$ **120**.

Messages received by router $R_B$ **125** from device $D_B$ **120** and intended for a node or device along the network **100** will contain public coordinates (a', p') and private coordinates (a, p) in their respective destination and source message header fields. Router $R_B$ **125** replaces the private coordinates (a, p) associated with device $D_B$ **120** with public coordinates (a', p') in the source message header field as part of the network address translation activity performed by router $R_B$ **125** and keeps track of the public coordinates assigned. Additionally, router $R_B$ **125** may maintain a list of public coordinates (a', p') contained in the destination message header field of messages received from device $D_B$ **120** in a translation table so as to permit the transmission back to device $D_B$ **120** of messages having such coordinates as the source message header field.

Messages received from a node or device along the network **100** whose source message header fields are on the translation table of router $R_B$ **125** will be forwarded by router $R_B$ **125** to device $D_B$ **120**, but with the public coordinates (a', p') replaced by the private coordinates (a, p) associated with device $D_B$ **120** in the destination message header field.

STUN servers $S_A$ **151**, $S_B$ **152** receive and return STUN messages to their associated devices $D_A$ **110**, $D_B$ **120**, by which an associated device $D_A$ **110**, $D_B$ **120** and their associated routers $R_A$ **115**, $R_B$ **125**, may learn what are the public network coordinates assigned to the device $D_A$ **110**, $D_B$ **120**, by their associated routers $R_A$ **115**, $R_B$ **125**. Although illustrated as separate nodes, STUN server $S_A$ **151** and $S_B$ **152** may be the same node.

STUN server $S_A$ **151** may receive STUN messages from router $R_A$ **115** and may return STUN messages to router $R_A$ **115**. The STUN message received from router $R_A$ **115** may be a STUN request message initiated by device $D_A$ **110** and the response may be a STUN response message containing, as part of its payload, the public coordinates (a', p') assigned by router $R_A$ **115** to device $D_A$ **110**. The public coordinates of STUN server $S_A$ **151** are added to the translation table of router $R_A$ **115** when the router $R_A$ **115** receives the STUN request message initiated by device $D_A$ **110**. When a STUN response message is forwarded back to device $D_A$ **110** by router $R_A$ **115**, even though the public coordinates will have been replaced by the private coordinates corresponding to device $D_A$ **110** in the STUN response message header field, the public coordinates maintained in the STUN response message payload will remain intact.

Similarly, STUN server $S_B$ **152** may receive STUN messages from router $R_B$ **125** and may return STUN messages to router $R_B$ **125**. The STUN message received from router $R_B$ **125** may be a STUN request message initiated by device $D_B$ **120** and the response may be a STUN response message containing, as part of its payload, the public coordinates (a', p') assigned by router $R_B$ **125** to device $D_B$ **120**. The public coordinates of STUN server $S_B$ **152** are added to the translation table of router $R_B$ **125** when the router $R_B$ **125** receives the STUN request message initiated by device $D_B$ **120**. When a STUN response message is forwarded back to device $D_B$ **120** by router $R_B$ **125**, even though the public coordinates will have been replaced by the private coordinates corresponding to device $D_B$ **120** in the STUN response message header field, the public coordinates maintained in the STUN response message payload will remain intact. It will be appreciated that devices $D_A$ **110** and $D_B$ **120** may share a common STUN server **151**, **152**.

Control server $C_A$ **141** associated with device $D_A$ **110** may receive control messages from device $D_A$ **110** (forwarded by router $R_A$ **115**) and transmit them (via intermediate control server(s) **143** as appropriate) through control server $C_B$ **142** associated with device $D_B$ **120** to router $R_B$ **125** for forwarding to device $D_B$ **120** and may receive control messages (via intermediate control server(s) **143** as appropriate) from device $D_B$ **120** (forwarded by router $R_B$ **125**) through control server $C_B$ **142** associated with device $D_B$ **120** and transmit them to device $D_A$ **110** (through router $R_A$ **151**).

Control server $C_B$ **142** associated with router $R_B$ **125** may receive control messages from device $D_B$ **120** (forwarded by router $R_B$ **125**) and transmit them (via intermediate control server(s) **143** as appropriate) through control server $C_A$ **141** associated with device $D_A$ **110** (forwarded by router $R_A$ **115**)to router $R_A$ **115** for forwarding to device $D_A$ **110** and may receive control messages (via intermediate control server(s) **143** as appropriate) from device $D_A$ **110** (forwarded by router $R_A$ **115**) through control server $C_A$ **141** associated with device $D_A$ **110** and transmit them to device $D_B$ **120** (through router $R_B$ **125**).

Although illustrated as separate nodes, in some example embodiments, control servers $C_A$ **141** and $C_B$ **142** may be the same node, in which case the control channel **140** consists simply of such control server.

In a steady state scenario, such as described herein, the device $D_A$ **110** will have previously made an outbound connection (not shown) through router $R_A$ **115** to control server **141** associated with the device $D_A$ **110** and the device $D_B$ **120** will have previously made an outbound connection (not shown) through router $R_B$ **125** to control server **142** associated with the device $D_B$ **120** so that there is no NAT traversal issue. Thus, messages may be freely exchanged by devices $D_A$ **110** and $D_B$ **120**, as shown, through their respective routers $R_A$ **115**, $R_B$ **125** along the control channel **140**.

When the control channel **140** has been established, a control message from device $D_A$ **110** through router $R_A$

**115** and intended for device $D_B$ **120**, will have its destination message header field populated with the public coordinates of control server $C_A$ **141** and its payload will indicate that the intended destination device is device $D_B$ **120**. Each control server **141-143** in the path that comprises the control channel **140** is known to each of the other control servers **141-143** in the path, and each control server **141-143** forwards on the control message to the next control server **141-143** in the path, changing the destination and source message header fields in conventional fashion.

The data channel **130**, when established between device $D_A$ **110** and device $D_B$ **120** as described herein, may receive data messages from router $R_A$ **115** and transmit them to router $R_B$ **125** and may receive data messages from router $R_B$ **125** and transmit them to router $R_A$ **115**. In some example embodiments, the data channel **130** provides User Datagram Protocol (UDP) or Transmission Control Protocol (TCP) connectivity between device $D_A$ **110** and device $D_B$ **120**.

In some example embodiments, when the data channel **130** has been established, a data message, sent from device $D_A$ **110** through router $R_A$ **115** and intended for device $D_B$ **120**, will indicate in the payload of the data message that the data message is intended for device $D_B$ **120**, and have the destination message header field populated with the public coordinates of device $D_B$ **120**. One or more packets from a data source to be transmitted by device $D_A$ **110** to device $D_B$ **120** may be added to the payload of the data message. In some example embodiments, these data packets are tagged with a file transfer identifier to facilitate reconstruction of the data source by device $D_B$ **120**.

The desired data channel is shown generally at **130**, across a network **100**, in which both devices are hidden behind routers **115, 125**. The desired data channel **130** may comprise a path extending between each device **110, 120** and encompassing one or more intermediate routers (not shown). Alternatively, the data channel **130** could be a direct connection between router $R_A$ **115** and router $R_B$ **125**.

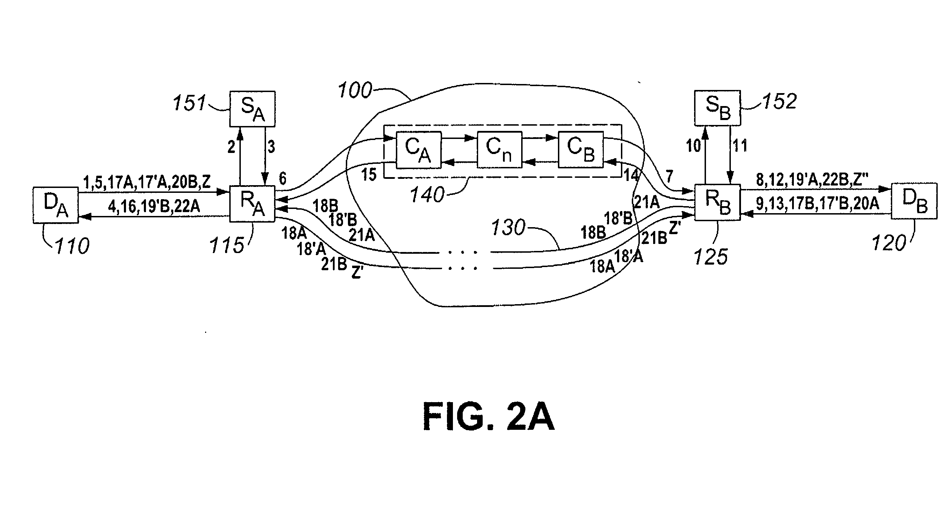

Example embodiments showing example processing steps for establishment or encryption or both of the data channel **130** will now be described having reference to **Figures 2A** through **7**. **Figures 2A, 3A, 5A** and **6A** are based on **Figure 1**, but show specific message flows between the devices and nodes described thereon.

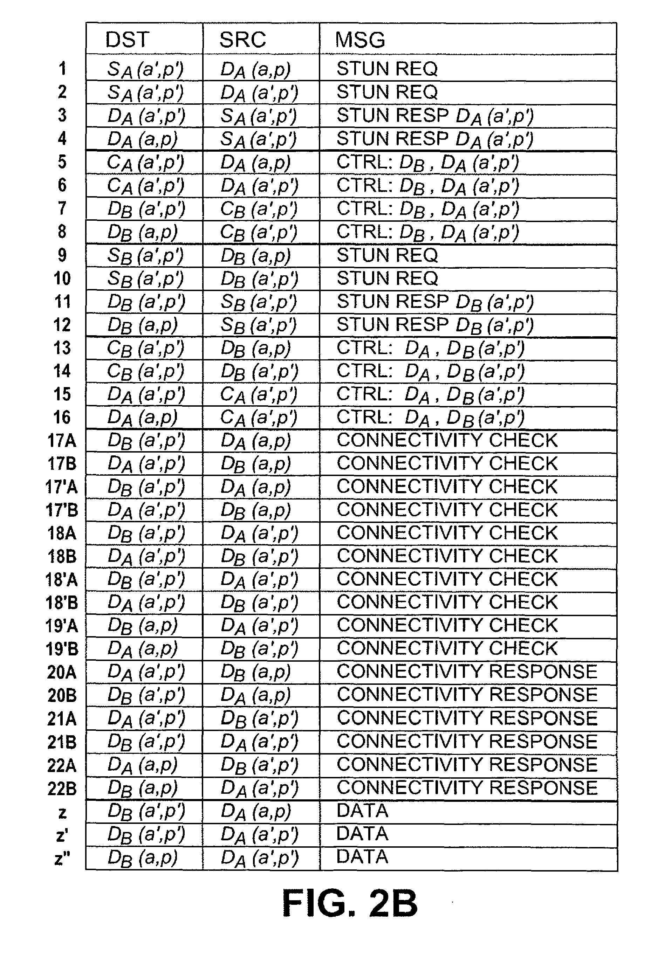

Message flows for the purposes of exchanging control information to set up and effect data communications between device $D_A$ **110** and device $D_B$ **120** are represented by numbered messages in **Figures 2A, 3A, 5A** and **6A**. The content of each message is shown, organized by message number, in the complementary tables shown in **Figures 2B, 3B, 5B** and **6B.**

Each of these messages shown in **Figures 2B, 3B, 5B** and **6B** may be understood conceptually to be of the format:

| DST | SRC | MSG |
| --- | --- | --- |

where DST is the destination message header field, and represents the coordinates associated with the intended recipient of the message; SRC is the source message header field, and represents the coordinates associated with the originator of the message; and MSG is the payload or data portion of the message.

Turning now to **Figure 2A**, there are shown example message flows between the two devices **110, 120**, their respective routers **115, 125**, the data channel **130**, the control channel **140** and control servers **141-143** and the STUN servers **151, 152,** in order to establish data channel **130** and initiate communications from device $D_A$ **110** to device $D_B$ **120** along the data channel **130**. The formats of the example message flows are shown in the table at **Figure 2B.**

By way of non-limiting example, a protocol for the establishment of the data channel **130** and known as "hole-punching" is described. This protocol follows 5 actions: (a) discovery by device $D_A$ **110** of its public coordinates; (b) transmission of public coordinates by device $D_A$ **110** to device $D_B$ **120**; (c) discovery by device $D_B$ **120** of its public coordinates; (d) transmission of public coordinates by device $D_B$ **120** to device $D_A$ **110**; and (e) connectivity testing. As is typical for some data channel establishment protocols, the hole-punching protocol involves the exchange of one or more control messages between devices $D_A$ **110** and device $D_B$ **120**, across the control channel **140**.

The first action, that of discovery by device $D_A$ **110** of its public coordinates, occupies STUN messages **(1)-(4)**. This action serves two purposes. First, it establishes public coordinates for device $D_A$ **110**. Second, it communicates these public coordinates back to device $D_A$ **110**. Device $D_A$ **110** transmits a STUN request message **(1)** to router $R_A$ **115,** comprising the public coordinates of STUN server $S_A$ **151** as its destination message header field and its own private coordinates as its source message header field.

STUN request message **(1)** is received by router $R_A$ **115,** which identifies public coordinates for device $D_A$ **110,** adds the public coordinates of STUN server $S_A$ **151** to its translation table and overwrites the source message header field with the public coordinates for device $D_A$ **110,** and forwards the amended STUN request message **(2)** to STUN server $S_A$ **151.**

Upon receipt of STUN request message **(2)** from router $R_A$ **115,** STUN server $S_A$ **151** generates and transmits back to router $R_A$ **115,** a STUN response message **(3)**, comprising the public coordinates of device $D_A$ **110** as its destination message header field as part of the message payload, and the public coordinates as its source message header field.

STUN response message (3) is received by router $R_A$ 115, which checks the source message header field against its translation table, and finding a corresponding entry, forwards the amended STUN response message (4) to device $D_A$ 110, after having overwritten the destination message header field with the private coordinates for device $D_A$ 110.

The second action, that of transmission of public coordinates by device $D_A$ 110 to device $D_B$ 120, occupies control messages (5)-(8). Device $D_A$ 110, which knows its public coordinates from the previous action, formulates a control message (5) that contains the public coordinates for device $D_A$ 110 in the control message payload along with an indication that the control message is intended for device $D_B$ 120. The destination message header field in control message (5) comprises the public coordinates for the control server $C_A$ 141 associated with device $D_A$ 110, and the source message header field comprises device $D_A$ 110's own private coordinates.

Control message (5) is received by router $R_A$ 115, which confirms that the public coordinates of control server $C_A$ 141 have been added to its translation table and overwrites the source message header field with the public coordinates for device $D_A$ 110, and forwards the amended control message (6) to control server $C_A$ 141.

Each control server 141-143 in turn overwrites the destination message header field in the control message with the public coordinates of the next control server 141-143 in the path of the control channel 140 and overwrites the source message header field with its own public coordinates, and forwards the thus amended control message (6) onward until the amended control message (6) eventually arrives at control server $C_B$ 142.

Control server $C_B$ 142, which recognizes that the control message (6) is intended for device $D_B$ 120, overwrites the destination message header field in the control message with the public coordinates of device $D_B$ 120 (which the control server $C_B$ 142 knows from its initial outbound connection message discussed previously), overwrites the source message header field with its own public coordinates and forwards the amended control message (7) to router $R_B$ 125.

Control message (7) is received by router $R_B$ 125, which checks the source header field against its translation table, and finding a corresponding entry, forwards the amended control message (8) to device $D_B$ 120, after having overwritten the destination message header field with the private coordinates for device $D_B$ 120.

Control message (8) serves as a request to device $D_B$ 120 to open a data channel 130 with device $D_A$ 110, prompting device $D_B$ 120 to commence the third action of the "hole punching" protocol, namely discovery by device $D_B$ 120 of its public coordinates, which occupies messages (9) through (12). In this regard, device $D_B$ 120, router $R_B$ 125 and STUN server $S_B$ 152 exchange STUN messages (9) through (12) in a similar manner as device $D_A$ 110, router $R_A$ 115 and STUN server $S_A$ 151 exchange STUN messages (1) through (4). For example, device $D_B$ 120 transmits a STUN request message (9) to router $R_B$ 125, comprising the public coordinates of STUN server $S_B$ 152 as its destination message header field and the private coordinates of device $D_B$ 120 as its source message header field.

STUN request message (9) is received by router $R_B$ 125, which identifies public coordinates for device $D_B$ 120, adds the public coordinates of STUN server $S_B$ 152 to its translation table and overwrites the source message header field with the public coordinates for device $D_B$ 120, and forwards the message (10) to STUN server $S_B$ 152.

Upon receipt of message (10) from router $R_B$ 125, STUN server $S_B$ 152 generates and transmits back to router $R_B$ 125, a STUN response message (11), comprising the public coordinates of device $D_B$ 120 as its destination message header field as part of the message payload, and its own public coordinates as its source message header field.

STUN response message (11) is received by router $R_B$ 125, which checks the source message header field against its translation table, and finding a corresponding entry, forwards amended STUN response message (12) to device $D_B$ 120, after having overwritten the destination message header field in control message (11) with the private coordinates for device $D_B$ 120.

The fourth action, that of transmission of public coordinates by device $D_B$ 120 to device $D_A$ 110, occupies control messages (13) through (16), which are similar to control messages (5) through (8) discussed above. In particular, device $D_B$ 120, which knows its public coordinates from the previous action, formulates a control message (13) that contains its public coordinates in the control message payload along with an indication that the control message is intended for device $D_A$ 110. The destination message header field of control message (13) comprises the public coordinates for the control server $C_B$ 142 associated with device $D_B$ 120 and the source message header field of control message (13) comprises the private coordinates of device $D_B$ 120.

Control message (13) is received by router $R_B$ 125, which confirms that the public coordinates of control server $C_B$ 142 have been added to its translation table and overwrites the source message header field with the public coordinates for device $D_B$ 120, and forwards the amended control message (14) to control server $C_B$ 142.

Each control server 141-143 in turn overwrites the destination message header field with the public coordinates of the next control server 141-143 in the path of the control channel 140 and overwrites the source message header field with its own public coordinates, and forwards the thus amended control message (14) onward until the amended control message (14) eventually arrives at control server $C_A$ 141.

Control server $C_A$ 141, which recognizes that the control message (14) is intended for device $D_A$ 110, overwrites the destination message header field with the public coordinates of device $D_A$ 110 (which the control server $C_A$ 141

knows from its initial outbound connection message discussed previously), overwrites the source message header field with its own public coordinates and forwards the amended control message (15) to router $R_A$ 115.

Control message (15) is received by router $R_A$ 115, which checks the source header field against its translation table, and finding a corresponding entry, forwards the message (16) to device $D_A$ 110, after having overwritten the destination message header field with the private coordinates for device $D_A$ 110.

The fifth action in the hole-punching protocol, that of connectivity testing, occupies data messages (17) through (22) and is performed to finalize set up of the data channel 130 through network 100. During hole-punching, device $D_A$ 110 sends a connectivity check data message (17A) to the public coordinates of device $D_B$ 120. Similarly, device $D_B$ 120 sends a connectivity check data message (17B) to the public coordinates of device $D_A$ 110.

Connectivity check data message (17A) is received by router $R_A$ 115, which confirms that the public coordinates of device $D_B$ 120 have been added to its translation table and overwrites the source message header field of message (17A) with the public coordinates for device $D_A$ 110, and forwards the amended connectivity check data message (18A) to router $R_B$ 125 through network 100.

Similarly, connectivity data message (17B) is received by router $R_B$ 125, which confirms that the public coordinates of device $D_A$ 110 have been added to its translation table and overwrites the source message header field of connectivity message (17B) with the public coordinates for device $D_B$ 120, and forwards the amended connectivity check data message (18B) to router $R_A$ 115.

Connectivity check data message (18A) is received by router $R_B$ 125, which checks the source header field against its translation table. Depending upon the timing of the connectivity check data messages (17A), (18A), (17B) and (18B), there may or may not be a corresponding entry. If there is no translation table entry in router $R_B$ 125 corresponding to an outbound communication from device $D_B$ 120 to device $D_A$ 110 (i.e. connectivity check data message (17B)), connectivity check data message (18A) is not forwarded to device $D_B$ 120.

Similarly, connectivity check data message (18B) is received by router $R_A$ 115, which checks the source header field against its translation table. Depending upon the timing of the messages (17A), (18A), (17B) and (18B), there may or may not be a corresponding entry. If there is no translation table entry in router $R_A$ 115 corresponding to an outbound communication from device $D_A$ 110 to device $D_B$ 120 (i.e. connectivity check data message (17A)), connectivity check data message (18A) is not forwarded to device $D_A$ 110.

Devices $D_A$ 110 and $D_B$ 120 are each configured to periodically send out respective connectivity check data messages (17A), (17B) until they each receive a corresponding connectivity response data message (22A), (22B) (discussed in more detail below) or a predetermined time out event occurs. Accordingly, the exchange of connectivity check data messages will continue until, for example, as shown in **Figure 2A**, the initial outgoing connectivity check data message (17A) from device $D_A$ 110 reaches router $R_A$ 115 before the subsequent incoming connectivity check data message (18'B) reaches router $R_A$ 115, whereupon the subsequent incoming connectivity check data message (18'B) will be recognized by router $R_A$ 115 and forwarded onto device $D_A$ 110 as connectivity check data message (19'B), after having overwritten the destination message header field with the private coordinates for device $D_A$ 110, and in the other direction, until the initial outgoing connectivity check data message (17B) from device $D_B$ 120 reaches router $R_B$ 125 before the subsequent incoming connectivity check message (18'A) reaches router $R_B$ 125, whereupon the subsequent incoming connectivity check data message (18'A) will be recognized by router $R_B$ 125 and forwarded onto device $D_B$ 120 as connectivity check data message (19'A) after having overwritten the destination message header field with the private coordinates for device $D_B$ 120.

In some cases, the first set of connectivity check data messages will be successfully received at the respective routers $R_A$ 115, $R_B$ 125 within the correct timing windows. However, due to differences in the speed at which the connectivity check data messages (17A), (17B) may travel across the network 100, this may not happen. In the example scenario shown in **Figure 2A**, this is exemplified by the absence of connectivity check data messages (19A) and (19B), corresponding to connectivity check data messages (18A) and (18B), signifying that the initial incoming connectivity check data message (18A) reached router $R_B$ 125 before the initial outgoing connectivity check data message (17B) did and that the initial incoming connectivity check data message (18B) reached router $R_A$ 115 before the initial outgoing connectivity check data message (17A) did.

The number of incoming connectivity check data messages (18B) received at router $R_A$ 115 before the initial outgoing connectivity check message (17A) is received may not be equal to the number of incoming connectivity check data messages (18A) received at router $R_B$ 125 before the initial outgoing connectivity check data message (17B) is received. Moreover, it is possible that one or more outgoing connectivity check data messages (17A), (17B) may be lost by a router 115, 125, so that it is a subsequent outgoing connectivity check data message (e.g. (17'A), (17'B), where" ' "denotes a repeated message) that will populate the translation table and permit reception of subsequent incoming connectivity check data messages (18'A), (18'B).

Once device $D_A$ 110 receives its incoming connectivity check message (19'B), device $D_A$ 110 transmits a connectivity response data message (20B, 21B, 22B) back along the data channel 130 to the public coordinates of device $D_B$ 120. Similarly, once device $D_B$ 120 receives its incoming connectivity check message (19'A), device $D_B$ 120

transmits a connectivity response data message **(20A, 21A, 22A)** back along the data channel **130** to the public coordinates of device $D_A$ **110.**

Thus, both device $D_A$ **110** and device $D_B$ **120** continue to send their respective connectivity check data messages **(17A), (17B)** until they receive their respective connectivity response data message **(22A), (22B)**. Once both connectivity response messages **(22A), (22B)** have been received, the data channel **130** has been set up and connectivity will have been provided between the devices $D_A$ **110** and $D_B$ **120**, for example, a direct UDP/TCP connectivity.

This connectivity allows secure or efficient or secure and efficient transfer of a data source from one of the devices **110, 120** to the other device **120, 110**, or *vice versa.* The data source being transferred may by way of non-limiting example be an e-mail message file, an image file, a media file such as a video or audio file, an application file containing executable code, or other type of file.

In some example embodiments, the data sending device **110** or **120** assigns a file transfer identifier to a data source that is to be transferred. Thus, when any data packets are selected for transmission, they are tagged with the file transfer identifier, so as to facilitate reconstruction of the data source at the data receiving device **120, 110**.

Thus, in **Figures 2A** and **2B,** message traffic containing data packets may be sent by either device **110, 120** along the data channel **130**. For example, representative data messages **(z), (z')** and **(z")** from device $D_A$ **110** to device $D_B$ **120** are shown in **Figure 2A** and **2B.**

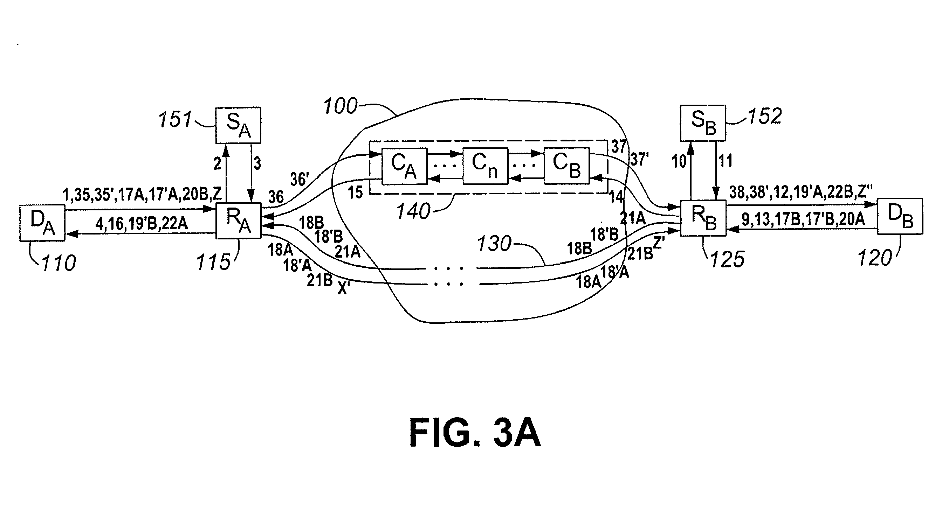

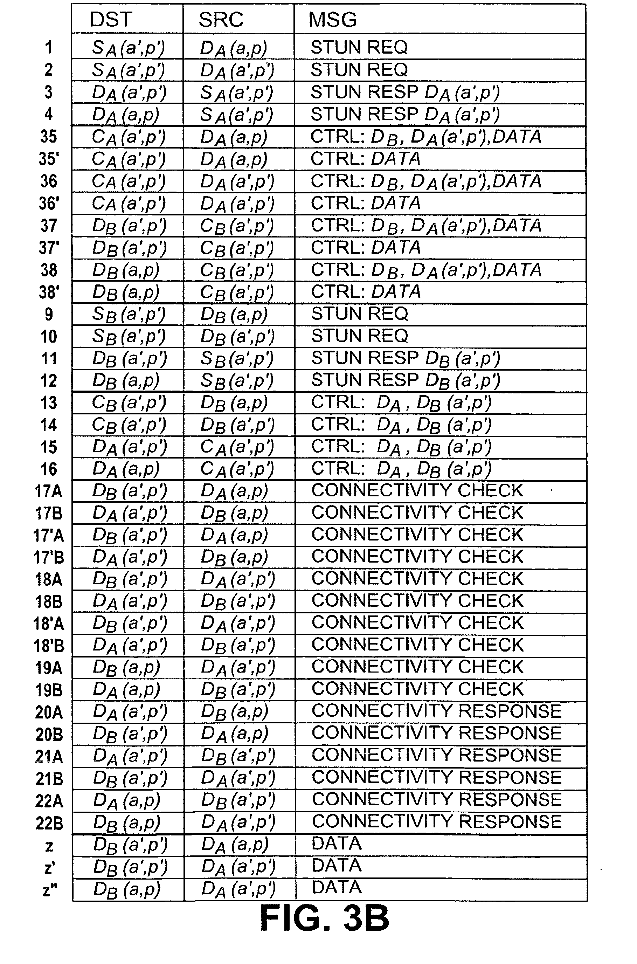

Turning now to **Figure 3A**, there is shown a corresponding example message flow in accordance with an example embodiment of the present disclosure. The content of the example message flows is represented in the table at **Figure 3B**. The embodiment shown in **Figures 3A** and **3B** is similar to that shown in **Figures 2A** and **2B**, with differences that will be apparent from the **Figures** and the following description. This embodiment shown in **Figures 3A** and **3B** takes advantage of the fact that during the delay in setting up the data channel **130**, the hole punching technique described in **Figure 2A** results in the exchange of several control messages **(5)-(8)**, **(13)-(16)** containing data across the control channel **140** before messages **(z), (z')** and **(z")** containing data packets tagged with the file transfer identifier are sent across the data channel **130**.

The method disclosed in **Figure 3A** and **3B** seeks to reduce the latency in transmitting data between devices **110** and **120** by sending some data from a data source to be transferred over the control channel **140** during the time that the hole punching protocol is being carried out, and then sending remaining data from the data source over the data channel **130** once it has been established.

As noted above, the control messages **(5)-(8)**, **(13)-(16)** contain data in their respective message payloads (namely the identity of the desired destination device and the public coordinates of the originating device). The embodiment of **Figures 3A** and **3B** recognizes that additional tagged data packets from a data source can also be transmitted along the control channel **140**. Thus, the set-up latency inherent in establishing the data channel **130** may be reduced by transmitting tagged data packets from a data source as part of the message payload of control messages, before the data channel **130** has been established.

One or more initial tagged data packets are transmitted as part of control messages **(35)-(38)** as shown in **Figure 3A** (assuming that the desired data packet(s) are to be sent from device $D_A$ **110** to device $D_B$ **120**). Control messages **(35)-(38)** are similar to control messages **(5)-(8)** in that the control message includes the identity of the desired destination device and the public coordinates of the originating device within the message payload, however the payload of control messages **(35)-(38)** also includes additional tagged data packets extracted from tagged data packets that would otherwise have been sent through the data channel **130** after the data channel **130** was established. Additional tagged data packets can also be transmitted in additional control messages **(35')-(38')** along the control channel **140** as appropriate, which messages are not strictly involved in establishing the data channel **130**, but are sent to take advantage of available bandwidth while the data channel **130** establishment protocol is being performed by the exchange of messages **(9)-(22)**. Accordingly, unlike control messages **(45)-(48)**, the control messages **(35')-(38')** do not contain any other data within the message payload, but only the tagged data packets to be transmitted.

The file transfer identifier used to tag the tagged data packets can be used by the data receiving device **120, 110** to reassemble the data source from the tagged data packets that are received through the control channel **140** and the remaining tagged data packets that are subsequently sent through the data channel **130** once it is established.

As discussed, the message flows of **Figure 3A** assume that the tagged data packet(s) are to be transmitted from device $D_A$ **110** to device $D_B$ **120**. Additionally, or alternatively, tagged data packet(s) could be transmitted in similar fashion from device $D_B$ **120** to device $D_A$ **110** in the message payload of control messages **(13)-(16)** and in additional control messages while the data channel **130** is being established.

It is typical to establish a peer to peer data channel **130** and to restrict use of the control channel **140** to facilitate the set up of peer to peer data channels **130**, because the use of peer to peer data channels **130** helps to avoid centralization of communications and attendant bottlenecks and security concerns that may result. Nevertheless, in the embodiment of **Figure 3A**, even though extra data packet(s) from a data source are being sent through the control channel **140** as opposed to exclusively through the data channel **130**, traffic volume and security issues are, in at least some applications, negligible, as the hole punching protocol already permits some data transmission (such as address information) along the control channel **140** and thus assumes that transmission along the control channel **140** is secure, and the extra tagged data packets are transmitted in the control channel **140** only for a limited time period until the data channel **130** is established.

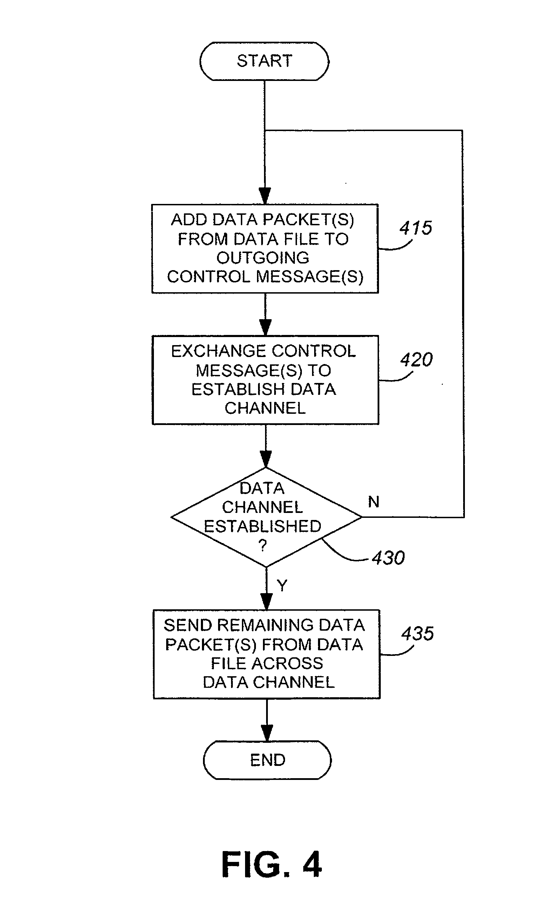

Turning now to **Figure 4**, there is shown a flow chart showing example processing actions for a device, for example, device $D_A$ **110** to establish a data channel **130** with another device, for example, device $D_B$ **120**, with reduced set up latency for transmission of data packet(s) from a data source by the device $D_A$ **110** to another device $D_B$ **120** in accordance with one or more embodiments disclosed herein.

As described in detail in the example embodiments described above in respect of **Figures 3A** and **3B,** as shown in action **415**, at least one data packet, tagged with the file transfer identifier, is added to the payload of at least one outgoing control message to be transmitted along the control channel **140** by a device, for example, in this case, device $D_A$ **110** and intended for device $D_B$ **120**. Accordingly, this control message is sent before the data channel **130** has been established.

Upon adding the at least one tagged data packet to the control message (action **415**), the control message is then transmitted (action **420**) along the control channel **140** as one of the control messages exchanged between the devices **110**, **120** as part of the protocol for establishing the data channel **130**.

It will be appreciated that additionally, or alternatively, device $D_B$ **120** may have a data source to be transmitted to device $D_A$ **110,** with the result that at least one data packet, tagged with a file transfer identifier, may have been added to an incoming control message along the control channel **140** which may be received as part of the protocol for establishing the data channel **130** (action **420**) by device $D_A$ **110.** If such is the case, then the added tagged data packet may be retrieved from the incoming control message.

As indicated in decision box **430**, a check is done to see if the data channel **130** has been established. If not, then additional control messages may be exchanged in the manner discussed above in respect of actions **415-425** in order to establish the data channel **130**.

Once the data channel **130** has been established, device $D_A$ **110** may send the remaining data packet(s), tagged with the file transfer identifier for the data source identifier, in messages across the data channel **130** to device $D_B$ **120**, where they may be combined with the tagged data packets transferred in control messages (action **420**) to reconstruct the data source.

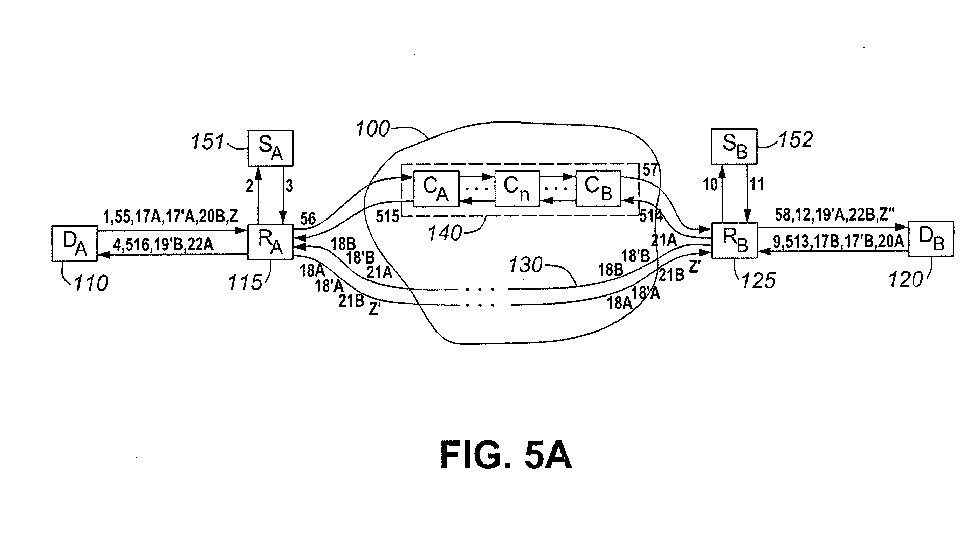

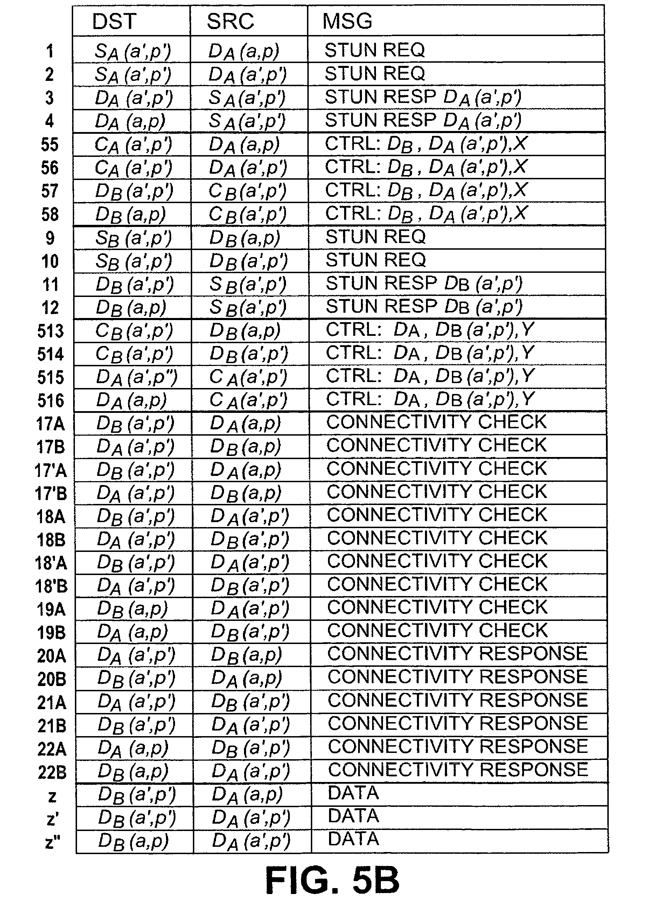

Turning now to **Figures 5A** and **5B,** it may be desired to ensure that any tagged data packets passed between the devices remains secure. This may involve exchange of one or more control messages between device A **110** and device B **120**, to give effect to a cryptographic protocol as discussed below.

The Diffie-Hellman key exchange cryptographic protocol, used as a non-limiting example, allows two parties that have no prior knowledge of each other to jointly establish a shared secret key *k* over an insecure communication channel. The protocol is described in U.S. Patent No. 4,200,700 entitled "Cryptographic Apparatus and Method" issued April 29, 1980 to Hellman *et al.* The key *k* can then be used to encrypt data at one end of the data channel **130** and decrypt the data at the other end of the data channel **130**. One of the hallmarks of the Diffie-Hellman key exchange protocol is that the protocol guarantees perfect forward secrecy, with the result that even if a third party steals the long-term secrets of two communicating parties, the attacker will still not be able to decrypt the messages that were exchanged before the secrets were stolen.

Under the Diffie-Hellman key exchange cryptography protocol, the key *k* may be derived from the formula:

$$k = X^y \bmod p = Y^x \bmod p \qquad (1)$$

where $k$ is the key,
*p* is a prime number known to both devices,
*g* is a number known to both devices, that satisfies the following property: for any i in {1, 2, ..., p-1}, there exists an integer *x* such that i = $g^x$ mod *p* , typically either 2 or 5,
*X* is the result of a calculation performed by a first device in accordance with

$$X = g^x \bmod p , \qquad (2)$$

where *x* is a secret integer known only to the first device, and
*Y* is the result of a calculation performed by a second device in accordance with

$$Y = g^y \bmod p ,\qquad\qquad (3)$$

where $y$ is a secret integer known only to the second device.

Because:

$$X^y \bmod p = \left(g^x \bmod p\right)^y = g^{xy} \bmod p , \text{ and} \qquad\qquad (4)$$

$$Y^x \bmod p = \left(g^y \bmod p\right)^x = g^{yx} \bmod p = g^{xy} \bmod p , \qquad\qquad (5)$$

it may be seen that the key $k$ may be derived by the first device through only knowledge of the values of $x, p , g$ and $Y$, and by the second device through only knowledge of the values of $y, p , g$ and X, and X and $Y$ may be transmitted in the clear by the first device and second device respectively to the second device and first device respectively. By contrast, a third party armed with the values *of p, g and X and Y* would not be able to discern the value of the key $k$ without also obtaining knowledge of either *x or y*.

Thus, in order to establish a key $k$ for a data channel **130**, the devices **110, 120** will have *a priori* agreed-upon values for $p$ and $g$ and for the purposes of encrypting the data channel **130**, one will adopt a value for $x$ and the other will adopt a value for $y$. Typically, large values are chosen for these values to prevent the likelihood of brute force decryption.

As part of the Diffie-Hellman key exchange protocol, a number of control messages are initiated by each device **110, 120**. These messages may be transmitted roughly simultaneously (subject to differences in processor speed or loading or both and complexity of computation, having regard to different values for $x$ and $y$ selected by device $D_A$ **110** and device $D_B$ **120** respectively).

There may be a considerable delay before either device **110, 120** transmits its initial Diffie-Hellman message, having regard to the significant computation that may be entailed in performing the calculations of **Equations (2)** and **(3)** respectively. The delay may be not be the same for either device **110**, **120** having regard to differences in processor speed or loading or both and complexity of computation using the different values for $x$ and $y$ selected by device $D_A$ **110** and device $D_B$ **120** respectively.

As shown in the non-limiting example of **Figures 5A** and **5B**, device $D_A$ **110** may transmit its computed value of cleartext expression X in the message payload of the initial control message **(55)-(58)** transmitted by device $D_A$ **110** to device $D_B$ **120** and device $D_B$ **120** may transmit its computed value of cleartext expression $Y$ in the message payload of the initial control message **(513)-(516)** transmitted by device $D_B$ **120** to device $D_A$ **110.** In other example embodiments, additional control messages having only the computed values of cleartext expressions X or $Y$ may be exchanged, leaving control messages **(5)-(8)** unaltered.

At this point, upon receipt of message **(58)**, device $D_B$ **120** may extract the value of cleartext expression X from the message payload of message **(58)** and proceed with a computation of the shared key $k$, based upon **Equation (5)**. By the same token, upon receipt of message **(516)**, device $D_A$ **110** may extract the value of cleartext expression $Y$ from the message payload of message **(516)** and proceed with a computation of the shared key $k$, based upon **Equation (4)**. Again, there may be a considerable delay in so doing, having regard to the significant computation that may be entailed in performing the calculations of **Equations (4)** and **(5)** respectively and having regard to differences in processor speed or loading or both and complexity of computation using the different values for $x$ and $y$ selected by device A **110** and device B **120** respectively, as well as the delay between the transmission of message **(55)-(58)** and of message **(513)-(516)**.

In any event, once the shared key $k$ is known to both device A **110** and device B **120**, either or both device can then proceed to securely transmit data packets (tagged with a file transfer identifier) along the data channel **130** as messages **(z), (z'), (z")** encrypted by shared key $k$.

However, because the tagged data packet(s) to be transferred are to be encrypted using shared key $k$, which will not have been established and known by both devices until at least after the receipt by device $D_A$ **110** of message **(516)**, the transmission of tagged data packet(s) by device $D_A$ **110** in the example embodiment of **Figures 4A** and **4B** as control message **(45)-(48)** and encrypted by shared key $k$ is notionally precluded because shared key $k$ is not yet known. Conceivably, however, provided that their transmission is delayed until after receipt of message **(516)**, the additional control messages **(35')-(38')** may be encrypted by shared key *k* and data transmitted along the control channel **140** thereby, so as to at least somewhat reduce the set-up latency of the data channel **130**.

Even so, the set-up latency of the data channel **130** before data may be exchanged may be significantly increased, both from the computation involved in developing the key *k* and in the exchange of the messages back and forth.

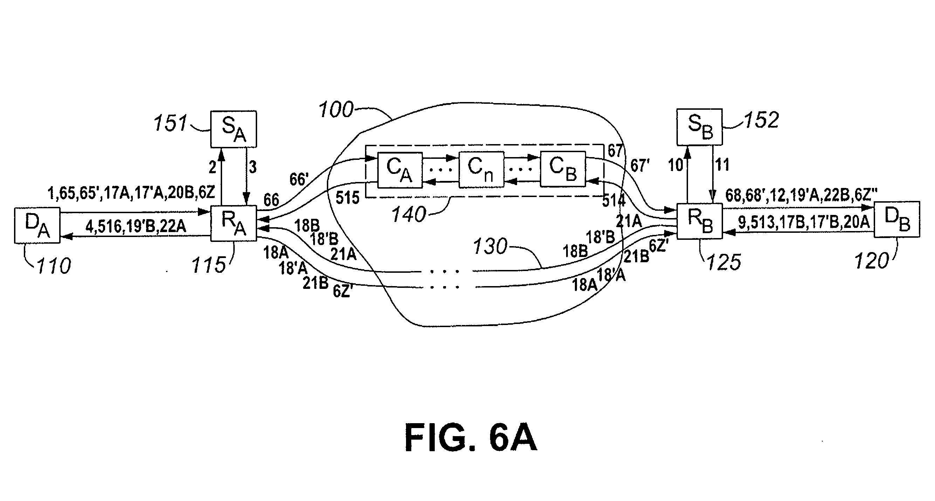

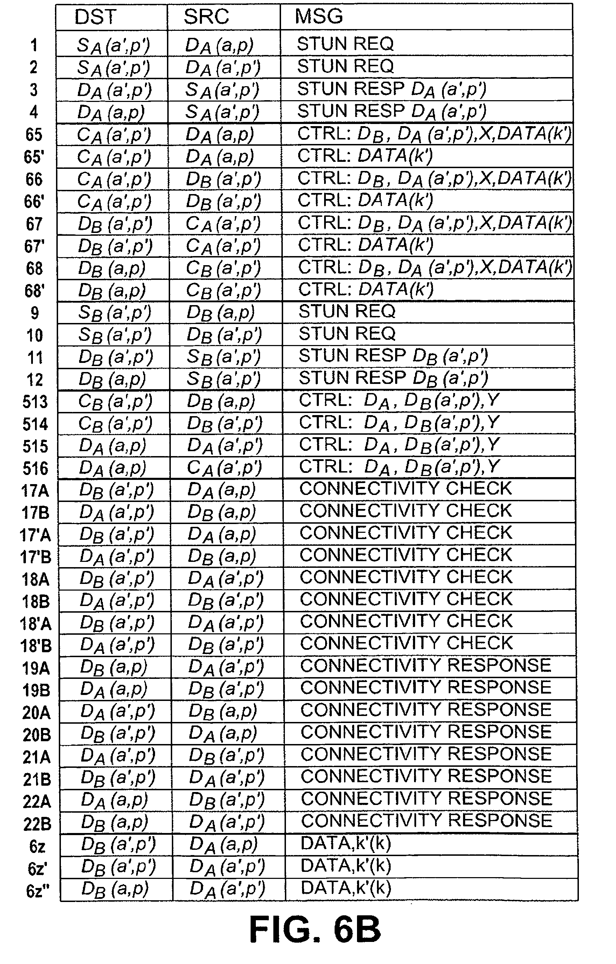

**Figures 6A** and **6B,** however, illustrate an example embodiment whereby considerable set up latency reduction, on the scale achieved by or even exceeding the example embodiment of **Figures 3A** and **3B** may be achieved while ensuring that each tagged data packet is encrypted, even before the shared key *k* has been established and is known to both devices.

In order to overcome the fact that at the time such tagged data packets are transmitted, the shared key *k* has not yet been established, this embodiment makes use of one or the other or both of temporary keys *k'* and *k"* to encrypt the tagged data packets transmitted over the control channel **140**, and then once the data channel **130** and the shared key *k* have been established the encrypting device transmits the temporary keys *k"* and *k'* to the other device across the data channel **130**, encrypted with the shared key *k* .

Thus, by way of non-limiting example, if device $D_A$ **110** had a data source to be transmitted to device $D_B$ **120**, one or more initial tagged data packets could be transmitted as part of control messages **(65)-(68)** as shown in **Figures 6A** and **6B,** with the data packets encrypted using temporary key *k'* established unilaterally by device $D_A$ **110,** added to the other data (identity of the desired destination and the public coordinates of the originating device) within the message payload. Again, additional tagged packets may be transmitted in additional control messages **(65')-(68')** along the control channel **130** thereafter as appropriate, while the remainder of the hole punching protocol is being performed **(9)-(22)**.

The message flows of **Figures 6A** and **6B** assume that tagged data packet(s) are to be transmitted from device $D_A$ **110** to device $D_B$ **120**. Additionally, or alternatively, tagged data packet(s) could be transmitted in similar fashion from device $D_B$ **120** to device $D_A$ **110** in the message payload of control messages **(13)-(16)** and in additional control messages while the remainder of the hole punching protocol is being performed **(17)-(22)**.

Thus, by the time that the shared key *k* has been established, a number of tagged data packets may have been transmitted between device $D_A$ **110** and device $D_B$ **120** along the control channel **130**, in secure fashion, being encrypted by temporary key *k'* known only (to this point) by device $D_A$ **110** or by temporary key *k"* known only (to this point) by device $D_B$ **120**. Because device $D_B$ **120** does not yet know temporary key *k'* and device $D_A$ **110** does not yet know temporary key *k"*, these tagged data packets remain unprocessed. However, some of the latency that would otherwise be incurred in establishing the shared key *k* before transmitting such tagged data packets has been avoided.

In any event, now that the shared key *k* has been established, device $D_A$ **110** may thereafter send further messages along the data channel **130** containing the remaining tagged data packets from the data source in the message payload that are encrypted by shared key *k* and thus safe from third party interception. One of the first such messages **(z), (z')** and **(z")** may also comprise encrypted key information comprising the temporary key k', encrypted by shared key *k* .

In the same fashion, device $D_B$ **120** may send a message (not shown) along the data channel **130** containing tagged data packets in the message payload that are encrypted by shared key *k* and thus safe from third party interception. One of the first such messages comprises encrypted key information comprising the temporary key *k"*, encrypted by shared key *k.*

Once temporary key *k'* has been received (in encrypted form) and is decrypted by device $D_B$ **120** using the shared key *k,* the previously received tagged data packets encrypted using temporary key *k'* and transmitted by control messages **(65)-(68)**, or **(65')-(68')** or both may be decrypted using the temporary key *k'* and processed by device $D_B$ **120** with the remaining tagged data packets transmitted along the data channel **130** to reconstruct the data source transferred from device $D_A$ **110** to device $D_B$ **120**.

Similarly, once temporary key *k"* has been received (in encrypted form) and decrypted by device $D_A$ **110**, the previously received tagged data packets encrypted using temporary key *k"* and transmitted by control messages (not shown) may be decrypted using the temporary key *k"* and processed by device $D_A$ **110** with the remaining tagged data packets transmitted along the data channel **130** to reconstruct the data source transferred from device $D_B$ **120** to device $D_A$ **110.**

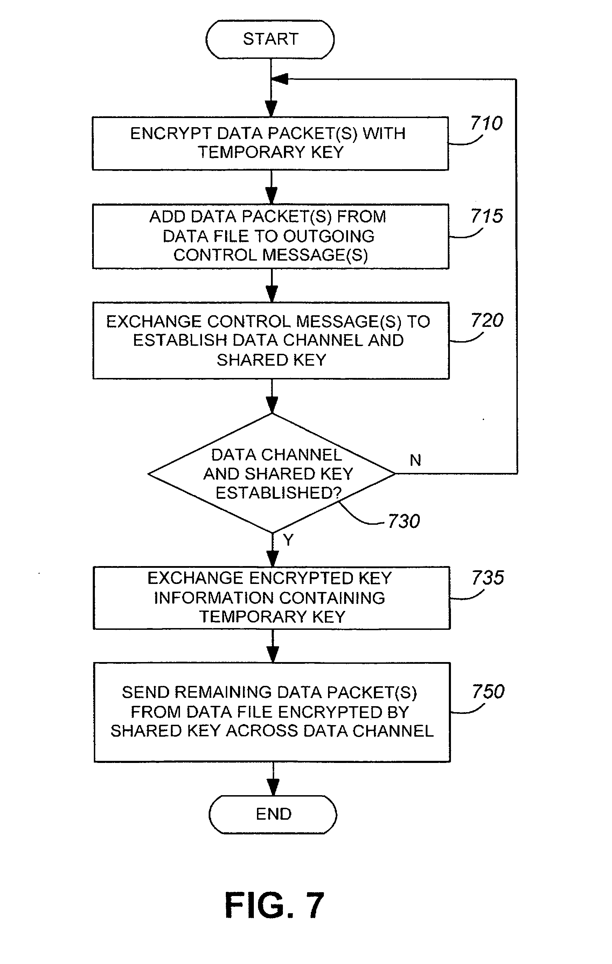

Turning now to **Figure 7**, there is shown a flow chart showing example processing actions for a device, for example, device $D_A$ **110**, to establish an shared key encrypted data channel **130** with another device, for example, device $D_B$ **120**, with reduced set up latency before transmission of data packets from a data source may be transmitted by the device $D_A$ **110** to another device $D_B$ **120** in accordance with one or more embodiments disclosed herein.

As described in detail in the example embodiments described above in respect of **Figures 6A** and **6B,** as shown in action **710**, prior to being added to the payload of the at least one outgoing control message (action **715** below), at least one data packet, tagged with the file transfer identifier, may be encrypted with a temporary key *k'* selected by device $D_A$ **110** and known only to device $D_A$ **110**.

Thereafter, at action **715**, the tagged data packet(s) are added to the payload of at least one outgoing control message to be transmitted along the control channel **140** by a device, for example, in this case, device $D_A$ **110** and intended for device $D_B$ **120**.

Upon adding the at least one tagged data packet to the control message (action **715**), the control message is then transmitted (action **720**) along the control channel **140** as one of the control messages exchanged between the devices **110, 120** as part of the protocol for establishing the data channel **130** or the shared key *k* or both. Accordingly, this control message is sent before the data channel **130** has been established.

It will be appreciated that additionally, or alternatively, device $D_B$ **120** may have a data source to be transmitted to device $D_A$ **110,** with the result that at least one data packet, tagged with a file transfer identifier, may have been added to an incoming control message along the control channel **140** which may be received (action **720**) by device $D_A$ **110.** If such is the case, then the added tagged data packet may be retrieved from the incoming control message.

As indicated in decision box **730**, a check is done to see if both the data channel **130** and the shared key *k* have been established. If not, then additional control messages may be exchanged in the manner discussed above in respect of actions **710**-**725** in order to establish the data channel **130** and the shared key *k.*

Once the data channel **130** and the shared key *k* have been established, data packets, tagged with the file transfer identifier and encrypted with the shared key *k,* may thereafter be exchanged between the devices **110, 120** along the data channel **130** using the shared key *k* established through the exchange of control messages (such as those exchanged in action **720**), where they may be combined with the tagged data packets transferred in control messages (action **720**) to reconstruct the data source. As indicated in action **735**, one of the first encrypted data packets to be exchanged will be the temporary key k', *k*" used by each of device $D_A$ **110** and device $D_B$ **120** to permit the other device to decrypt any tagged data packets encrypted with such temporary key prior to establishment of the shared key *k.*

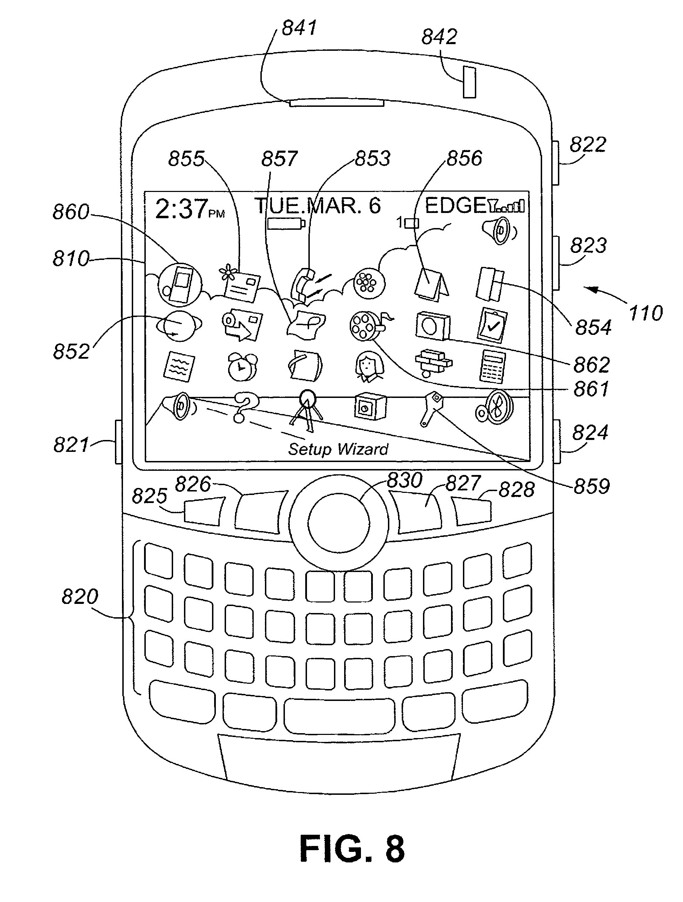

Referring now to **Figure 8**, there is shown a graphical representation of a front view of an example of a mobile device **110** to which example embodiments described herein can be applied. The mobile device **110** has a two-way electronic messaging communications capabilities and possibly also voice communications capabilities. Depending on the functionality provided by the mobile device **110**, in various embodiments the mobile device **110** may be a wireless handset, a data communications device, a multiple-mode communications device configured for both data and voice communication, a mobile telephone, a pager, a personal digital assistant (PDA), which may be enabled for wireless communications, a personal entertainment device, a telecommunications device installed within a vehicle, a portable, laptop, notebook and/or tablet computer with a wireless modem or wireless network card, or a portable, laptop, notebook and/or tablet computer or a phone device with a fixed connection to a network, among other things. Many suitable devices may combine some or all of these functions. The mobile device **110** may support specialized activities, such as gaming, inventory control, job control and/or task management functions and the like.

The mobile device **110** is, in at least one example embodiment, a handheld device having a casing or housing that is dimensioned to fit into a purse, pocket or belt-mounted device holster.

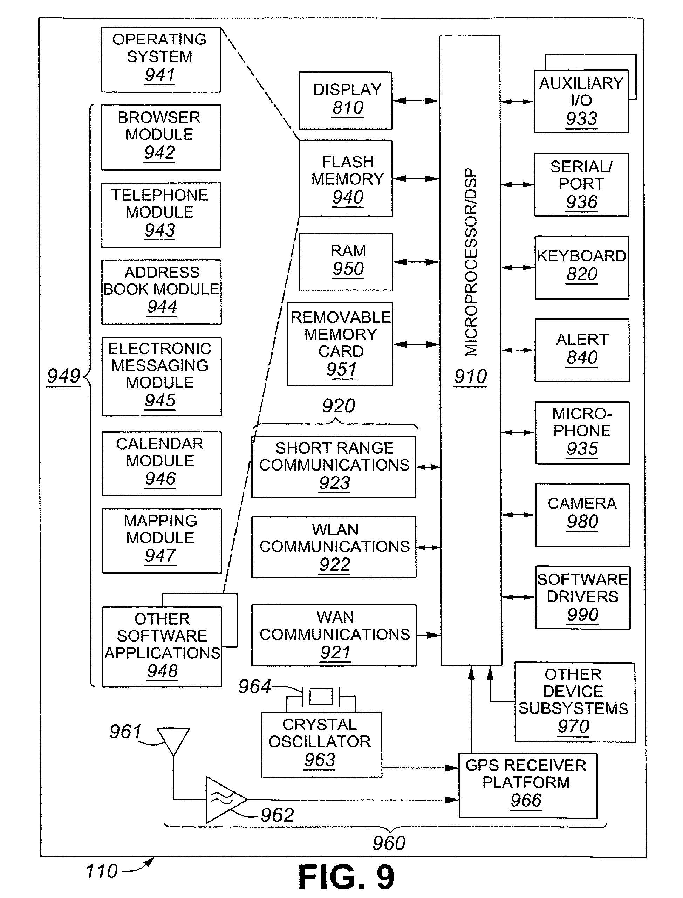

The mobile device **110** includes a display screen **810**, an alphanumeric keyboard or keypad **820**, optionally one or more non-keyboard inputs, such as buttons **821-828**, which may be navigational, function, exit and/or escape keys, which may be inwardly depressed to provide further input function, or touch-sensitive areas (not shown) within the display screen **810**, and/or a rotatable input device such as a trackball **830** or scrollwheel or trackwheel (not shown) and a speaker **841**, visible indicator **842** or other alert **840** (shown on **Figure 9**).

The keyboard or keypad **820** may comprise a touch-sensitive surface (not shown). In some example embodiments keys in the keyboard **820** may contain one or more letters aligned in a QWERTY layout. In some embodiments the keys in the keyboard **820** may not be actual physical keys but may be virtual keys displayed on a touch screen display (not shown). In some example embodiments, the keyboard **820** includes a QWERTZ layout, an AZERTY layout, a Dvorak layout, sequential type layouts or the like, or a traditional numeric keypad (not shown) with alphabetic letters associated with a telephone keypad. In some example embodiments, the keyboard **820** layout has reduced keys, such as a reduced QWERTY layout.

Referring now to **Figure 9**, the mobile device **110** includes a controller that includes at least one microprocessor and/or digital signal processor (DSP) **910** for controlling the overall operation of the mobile device **110**. The microprocessor / DSP **910** interacts with a communications subsystem shown generally at **920**, and with further device subsystems such as display **810**, which may include a touch-sensitive surface, keyboard or keypad **820**, one or more auxiliary input / output (I/O) subsystems or devices **933** (*e.g.* trackball **830**, non-keyboard inputs **821**-**828** or a scrollwheel or trackwheel (not shown) and their associated controllers), one or more alerts **840** (which may be audible **841**, visible **842** and/or tactile (not shown)) and/or a headset port (not shown), a microphone **935**, a serial port **936**, which may be a universal serial bus (USB) port, a flash memory **940**, random access memory (RAM) **950**, a removable memory card **951**, a charge-coupled device (CCD) camera **980**, a global positioning system (GPS) (or other navigation) satellite receiver **960** (which may comprise an antenna **961**, an amplifier **962**, crystal oscillator **963**, and GPS receiver platform **966**), and any other device subsystems generally designated as **970**.

The microprocessor / DSP **910** operates under stored program control of the operating system software and/or firmware **941** and various software and/or firmware applications **949** used by the microprocessor / DSP **910**, which are, in one example embodiment, stored in a persistent store such as flash memory **940** or similar storage element. The operating system **941**, software disclosures shown generally at **949**, or parts thereof, may be temporarily loaded into a volatile store such as RAM **950**.

The microprocessor / DSP **910** executes operating system drivers that provide a platform from which the rest of the software **941** and **949** operates. The operating system drivers **990** provide drivers for the wireless device hardware with standardized interfaces that are accessible to application software. The operating system drivers **990** include application management services ("AMS") (not shown) that transfer control between applications running on the mobile device **110**.

The microprocessor / DSP **910**, in addition to its operating system **941** functions, in example embodiments, enables execution of software applications **949** for interacting with the various device subsystems of the mobile device **110**, by presenting options for user-selection, controls for user-actuation, and/or cursors and/or other indicators for user-direction. The mobile device **110** may further accept user data entry, including numbers to dial or various parameter values for configuring the operation of the mobile device **110**.

A predetermined set of software applications **949** may be executed in response to user commands to control basic device operations, including data and voice communication applications, such as a web browser module **942**, a telephone module **943**, an address book module **944**, an electronic messaging module **945** (which may include e-mail, SMS messaging and/or PIN messaging) and a calendar module **946**, for example, will normally be installed on the mobile device **110** during manufacture. Further software applications **948**, such as a mapping module **947**, a media player module (not shown), a camera module (not shown), one or more Java applications (not shown), may also be loaded onto the communications device **110** during manufacture, or through wired or wireless communications along the communications subsystem **920**, the auxiliary I/O subsystem **933**, serial port **936**, information carrier media such as portable data storage media like the removable memory card **951**, or any other suitable subsystem **970**, and installed in the RAM **950** or a non-volatile store such as the flash memory **940** for execution by the microprocessor / DSP **910**. These applications may configure the mobile device **110** to perform various customized functions in response to user interaction. Such flexibility in application installation increases the functionality of the mobile device **110** and may provide enhanced on-device functions, communication-related functions, or both. In some embodiments, some or part of the functionality of the functional modules can be implemented through firmware or hardware components instead of, or in combination with, computer software instructions executed by the microprocessor / DSP **910** (or other processors (not shown)).

Under instructions from various software applications **949** resident on the mobile device **110**, the microprocessor / DSP **910** is configured to implement various functional components or modules, for interacting with the various device subsystems of the mobile device **110**. Additionally, the microprocessor / DSP **910** may be configured and/or programmed over-the-air, for example from a wireless base station (not shown), a wireless access point (not shown), or a peer mobile device **110**. The software application **949** may comprise a compiled set of machine-readable instructions that configure the microprocessor / DSP **910** to provide the desired functionality, or the software applications **949** may be high-level software instructions to be processed by an interpreter or compiler to indirectly configure the microprocessor / DSP **910**.

The web browser module **942** enables the display **810** to show a web page and permits access to a specified web address, for example via data transfer over one or more of the communications subsystem **920** components, for example, by wireless communications with a wireless access point (not shown), a cell tower (not shown), a peer mobile device **110**, or any other wireless communication network or system (not shown). Said network is coupled to a wired network, such as the Internet (not shown), through which the mobile device **110** may have access to information on various origin servers (not shown) for providing content for display on the display **810**. Alternatively, the mobile device **110** may access the network through a peer mobile device **110**, acting as an intermediary, in a relay type or hop-type connection.

The telephone module **943** enables the mobile device **110** to transmit and receive voice and/or data over one or more of the communications subsystem **920** components.

The address book module **945** enables address book information, such as telephone numbers, email and/or instant text messaging addresses and/or PIN numbers to be stored and accessed on the mobile device **110**.

The electronic messaging module **945** enables the mobile device **110** to send and receive electronic messages over one or more of the communications subsystems **920** components. Examples of electronic messaging include email, personal identification number (PIN) messaging and/or short message service (SMS) messaging.

The calendar module **946** enables appointment and/or task information to be stored and accessed on the mobile device **110**.

The mapping module **947** provides location-based services relative to the current location of the mobile device **110**, including but not limited to storage, access and/or retrieval of detailed mapping information on the communications device **110** and provision of turn-by-turn directions from an initial map position to a desired destination map position in accordance therewith. Other location-based service modules (not shown) may include the E911 cellular phone positioning initiative of the Federal Communications Commission (FCC).

The media player application **948** configures the mobile device **110** to retrieve and play audio or audiovisual media. The camera application **948** configures the mobile device **110** to image and take still or motion video images. The Java applets **948** configure the mobile device **110** to provide games, utilities, and other functionality. One or more components might provide functionality related to speed measurement, disablement of device features, and/or overriding of the disablement of device features as described herein.

Referring briefly to **Figure 8** again, there is shown an example of a mobile device **110** on which a plurality of user selectable icons are shown on its display screen **810**. The icons are each associated with functions that can be performed by the mobile device **110**. For example, **Figure 8** shows a browser icon **852** for accessing web browsing functions (associated with browser module **942**), a "Phone" icon **853** for accessing phone functionality (associated with telephone module **943**), an "Address Book" icon **854** for accessing address book functions (associated with address book module **942**), a "Messages" icon **855** for accessing electronic messaging functions of the communications device **110** (associated with electronic messaging module **945**), a "Calendar" icon **856** for accessing calendar functions (associated with calendar module **946**), a "Maps" icon **857** for accessing mapping functions (associated with mapping module **947**), a "Media" icon **861** for accessing media player functions (associate with media player application **948**), a "Camera" icon **862** for accessing camera functions (associated with the camera application **948**) and an options icon **859** (associated with an options module, which may be a separate module or executed by one or more existing modules). An icon **850** is shown highlighted or focused by a caret or selection symbol **860** which can be navigated by a device user among the displayed icons through manipulation of the trackball **830** (or other navigational input device). The trackball **830** is also depressible, such that depression of the trackball **830** when an icon is highlighted or focused by selection symbol **860** results in the launch of functions of the associated module.

Each of the software disclosures **949** may include layout information defining the placement of particular fields, such as text fields, input fields, etc., in a user interface for the software disclosure **949**.

In **Figure 9**, the communications subsystem **920** acts as an interface between the mobile device **110** and a communications environment (not shown). As will be apparent to those skilled in the field of communications, the particular configuration of the communications subsystem **920** will be dependent upon the communications network(s) in the communications environment in which the communications device **110** is intended to operate, and may comprise one or more of a WAN communications module **921**, a WLAN communications module **922**, and a short-range communications module **923**.

In the foregoing disclosure, for purposes of explanation and not limitation, specific details are set forth such as particular architectures, interfaces, techniques, etc. in order to provide a thorough understanding of the present disclosure. However, the present disclosure may be practised in other embodiments that depart from these specific details. All statements herein reciting principles, aspects and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

The present disclosure can be implemented in digital electronic circuitry, or in computer hardware, firmware, software, or in combination thereof. Apparatus of the disclosure can be implemented in a computer program product tangibly embodied in a machine-readable storage device for execution by a programmable processor; and methods actions can be performed by a programmable processor executing a program of instructions to perform functions of the disclosure by operating on input data and generating output.

Generally, a computer will include one or more mass storage devices for storing data; such devices include magnetic disks and cards, such as internal hard disks, and removable disks and cards; magneto-optical disks; and optical disks. Storage devices suitable for tangibly embodying computer program instructions and data include all forms of volatile and non-volatile memory, including by way of example semiconductor memory devices, such as EPROM, EEPROM, and flash memory devices; magnetic disks such as internal hard disks and removable disks; magneto-optical disks; CD-ROM and DVD-ROM disks; and buffer circuits such as latches and flip flops. Any of the foregoing can be supplemented by, or incorporated in ASICs (application-specific integrated circuits), FPGAs (field-programmable gate arrays) or DSPs (digital signal processors).

Various modifications and variations may be made to the embodiments disclosed herein, consistent with the present disclosure, without departing from the scope of the present disclosure. While preferred embodiments are disclosed, this is not intended to be limiting. Rather, the general principles set forth herein are considered to be merely illustrative of the scope of the present disclosure and it is to be further understood that numerous changes covering alternatives, modifications and equivalents may be made without straying from the scope of the present disclosure, as defined by the appended claims.

Other embodiments consistent with the present application will become apparent from consideration of the specification and the practice of the disclosure disclosed herein.

## Claims

**1.** A method for sending data from a first device (110) to a second device (120) over a network (100), comprising at the first device (110):

sending at least one control message to the second device (120) along a control channel (140) prior to establishing a data channel (130) between the first device (110) and the second device (120);
including some data from a data source in the at least one control message prior to establishing the data channel (130); and
sending remaining data from the data source to the second device (120) along the data channel (130) once the data channel (130) has been established.

2. The method according to claim 1, comprising assigning a file transfer identifier to the data source and including the file transfer identifier with the data included in the at least one control message.

3. The method according to claim 2, comprising including the file transfer identifier with the remaining data for reassembling the data source at the second device.

4. The method according to anyone of claims 1 through 3, wherein the at least one control message is sent as part of a hole-punching protocol.

5. The method according to claim 4, wherein the first device (110) is located behind a network address translation device (151), the first device (110) exchanging at least one message with the associated network address translation device (151) as part of the hole punching protocol.

6. The method according to anyone of claims 1 through 5, wherein the data included in the at least one control message is included as payload data in the at least one control message along with public address information of the first device.

7. The method according to any one of claims 1 through 6, wherein the at least one control message is sent to establish the data channel (130).

8. The method according to any one of claims 1 through 7, further comprising:

encrypting the data included in the at least one control message with a temporary key;
encrypting key information identifying the temporary key with a further key known only to the first device and second device; and
sending the encrypted key information to the second device along the data channel, once the data channel has been established, for decrypting the data included in the at least one control message at the second device.

9. A first device (110) for sending data to a second device (120) over a network (100), the first device (110) for:

sending at least one control message to the second device (120) along a control channel (140) prior to establishing a data channel (130) between the first device (110) and the second device (120);
including some data from a data source in the at least one control message prior to establishing the data channel (130); and
sending remaining data from the data source to the second device (120) along the data channel (130) once the data channel (130) has been established.

10. The first device according to claim 9, wherein the first device (110) is a mobile device.

11. The first device according to any one of claims 9 and 10, for:

including the data in the at least one control message as payload data in the at least one control message along with public address information of the first device.

12. The first device according to any one of claims 9 through 11 for sending the at least one control message to establish the data channel (130).

13. The first device according to any one of claims 9 through 12 for:

encrypting the data included in the at least one control message with a temporary key;

encrypting key information identifying the temporary key with a further key known only to the first device (110) and second device (120); and

sending the encrypted key information to the second device (120) along the data channel (130), once the data channel (130) has been established, for decrypting the data included in the at least one control message at the second device (120).

14. A computer-readable medium in a first device (110) for sending data to a second device (120) over a network (100), the medium having stored thereon, computer-readable and computer-executable instructions which, when executed by a processor, cause the processor to perform actions comprising:

sending at least one control message to the second device (120) along a control channel (140) prior to establishing a data channel (130) between the first device (110) and the second device (120);

including some data from a data source in the at least one control message sent prior to establishing the data channel (130); and

sending remaining data from the data source to the second device (120) along the data channel (130) once the data channel (130) has been established.

15. The computer-readable medium according to claim 14, further causing the processor to perform actions comprising:

encrypting the data included in the at least one control message with a temporary key;

encrypting key information identifying the temporary key with a further key known only to the first device (110) and second device (120); and

sending the encrypted key information to the second device (120) along the data channel (130), once the data channel (130) has been established, for decrypting the data included in the at least one control message at the second device (120).

**Patentansprüche**

1. Ein Verfahren zum Senden von Daten von einer ersten Vorrichtung (110) an eine zweite Vorrichtung (120) über ein Netzwerk (100), das an der ersten Vorrichtung (110) aufweist:

Senden zumindest einer Steuerungsnachricht an die zweite Vorrichtung (120) entlang eines Steuerungskanals (140) vor einem Herstellen eines Datenkanals (130) zwischen der ersten Vorrichtung (110) und der zweiten Vorrichtung (120);

Aufnehmen einiger Daten von einer Datenquelle in die zumindest eine Steuerungsnachricht vor dem Herstellen des Datenkanals (130); und

Senden von verbleibenden Daten von der Datenquelle an die zweite Vorrichtung (120) entlang des Datenkanals (130), sobald der Datenkanal (130) hergestellt ist.

2. Das Verfahren gemäß Anspruch 1, das aufweist ein Zuweisen eines Datei-Übertragungs-Identifizierers zu der Datenquelle und Aufnehmen des Datei-Übertragungs-Identifizierers in die Daten, die in der zumindest einen Steuerungsnachricht enthalten sind.

3. Das Verfahren gemäß Anspruch 2, das aufweist ein Aufnehmen des Datei-Übertragungs-Identifizierers in die verbleibenden Daten zum erneuten Zusammensetzen der Datenquelle an der zweiten Vorrichtung.

4. Das Verfahren gemäß einem der Ansprüche 1 bis 3, wobei die zumindest eine Steuerungsnachricht als Teil eines Lochungs-Protokolls gesendet wird.

5. Das Verfahren gemäß Anspruch 4, wobei sich die erste Vorrichtung (110) hinter einer Netzwerk-Adresse-Übersetzungs-Vorrichtung (151) befindet, wobei die erste Vorrichtung (110) zumindest eine Nachricht mit der assoziierten Netzwerk-Adresse-Übersetzungs-Vorrichtung (151) als Teil des Lochungs-Protokolls austauscht.

6. Das Verfahren gemäß einem der Ansprüche 1 bis 5, wobei die Daten, die in der zumindest einen Steuerungsnachricht enthalten sind, als Nutzlastdaten in der zumindest einen Steuerungsnachricht zusammen mit öffentlicher Adress-Information der ersten Vorrichtung enthalten sind.

7. Das Verfahren gemäß einem der Ansprüche 1 bis 6, wobei die zumindest eine Steuerungsnachricht gesendet wird, um den Datenkanal (130) herzustellen.

8. Das Verfahren gemäß einem der Ansprüche 1 bis 7, das weiter aufweist:

Verschlüsseln der Daten, die in der zumindest einen Steuerungsnachricht enthalten sind, mit einem temporären Schlüssel;
Verschlüsseln einer Schlüssel-Information, die den temporären Schlüssel identifiziert, mit einem weiteren Schlüssel, der nur der ersten Vorrichtung und der zweiten Vorrichtung bekannt ist; und
Senden der verschlüsselten Schlüssel-Information an die zweite Vorrichtung entlang des Datenkanals, sobald der Datenkanal hergestellt ist, zum Entschlüsseln der Daten, die in der zumindest einen Steuerungsnachricht enthalten sind, an der zweiten Vorrichtung.

9. Eine erste Vorrichtung (110) zum Senden von Daten an eine zweite Vorrichtung (120) über ein Netzwerk (100), wobei die erste Vorrichtung (110) vorgesehen ist zum:

Senden zumindest einer Steuerungsnachricht an die zweite Vorrichtung (120) entlang eines Steuerungskanals (140) vor einem Herstellen eines Datenkanals (130) zwischen der ersten Vorrichtung (110) und der zweiten Vorrichtung (120);
Aufnehmen einiger Daten von einer Datenquelle in die zumindest eine Steuerungsnachricht vor dem Herstellen des Datenkanals (130); und
Senden von verbleibenden Daten von der Datenquelle an die zweite Vorrichtung (120) entlang des Datenkanals (130), sobald der Datenkanal (130) hergestellt ist.

10. Die erste Vorrichtung gemäß Anspruch 9, wobei die erste Vorrichtung (110) eine mobile Vorrichtung ist.

11. Die erste Vorrichtung gemäß einem der Ansprüche 9 und 10, zum:

Aufnehmen der Daten in die zumindest eine Steuerungsnachricht als Nutzlastdaten in der zumindest einen Steuerungsnachricht zusammen mit öffentlicher Adress-Information der ersten Vorrichtung.

12. Die erste Vorrichtung gemäß einem der Ansprüche 9 bis 11 zum Senden der zumindest einen Steuerungsnachricht, um den Datenkanal (130) herzustellen.

13. Die erste Vorrichtung gemäß einem der Ansprüche 9 bis 12 zum:

Verschlüsseln der Daten, die in der zumindest einen Steuerungsnachricht enthalten sind, mit einem temporären Schlüssel;
Verschlüsseln einer Schlüssel-Information, die den temporären Schlüssel identifiziert, mit einem weiteren Schlüssel, der nur der ersten Vorrichtung (110) und der zweiten Vorrichtung (120) bekannt ist; und
Senden der verschlüsselten Schlüssel-Information an die zweite Vorrichtung (120) entlang des Datenkanals (130), sobald der Datenkanal (130) hergestellt ist, zum Entschlüsseln der Daten, die in der zumindest einen Steuerungsnachricht enthalten sind, an der zweiten Vorrichtung (120).

14. Ein computerlesbares Medium in einer ersten Vorrichtung (110) zum Senden von Daten an eine zweite Vorrichtung (120) über ein Netzwerk (100), wobei das Medium computerlesbare und computerausführbare Anweisungen darauf gespeichert hat, die bei Ausführung durch einen Prozessor den Prozessor veranlassen, Aktionen durchzuführen, die aufweisen:

Senden zumindest einer Steuerungsnachricht an die zweite Vorrichtung (120) entlang eines Steuerungskanals (140) vor einem Herstellen eines Datenkanals (130) zwischen der ersten Vorrichtung (110) und der zweiten Vorrichtung (120);
Aufnehmen einiger Daten von einer Datenquelle in die zumindest eine Steuerungsnachricht, gesendet vor dem Herstellen des Datenkanals (130); und
Senden von verbleibenden Daten von der Datenquelle an die zweite Vorrichtung (120) entlang des Datenkanals (130), sobald der Datenkanal (130) hergestellt ist.

15. Das computerlesbare Medium gemäß Anspruch 14, das weiter den Prozessor veranlasst zum Durchführen von Aktionen, die aufweisen:

Verschlüsseln der Daten, die in der zumindest einen Steuerungsnachricht enthalten sind, mit einem temporären Schlüssel;
Verschlüsseln einer Schlüssel-Information, die den temporären Schlüssel identifiziert, mit einem weiteren Schlüssel, der nur der ersten Vorrichtung (110) und der zweiten Vorrichtung (120) bekannt ist; und
Senden der verschlüsselten Schlüssel-Information an die zweite Vorrichtung (120) entlang des Datenkanals (130), sobald der Datenkanal (130) hergestellt ist, zum Entschlüsseln der Daten, die in der zumindest einen Steuerungsnachricht enthalten sind, an der zweiten Vorrichtung (120).

**Revendications**

1. Procédé permettant d'envoyer des données d'un premier dispositif (110) à un deuxième dispositif (120) sur un réseau (100), comprenant au niveau du premier dispositif (110) le fait :

    d'envoyer au moins un message de commande au deuxième dispositif (120) le long d'un canal de commande (140) avant l'établissement d'un canal de données (130) entre le premier dispositif (110) et le deuxième dispositif (120) ;
    d'inclure certaines données provenant d'une source de données dans l'au moins un message de commande avant l'établissement du canal de données (130) ; et
    d'envoyer des données restantes provenant de la source de données au deuxième dispositif (120) le long du canal de données (130) une fois que le canal de données (130) a été établi.

2. Procédé selon la revendication 1, comprenant le fait d'attribuer un identifiant de transfert de fichier à la source de données et d'inclure l'identifiant de transfert de fichier avec les données incluses dans l'au moins un message de commande.

3. Procédé selon la revendication 2, comprenant le fait d'inclure l'identifiant de transfert de fichier avec les données restantes afin de réassembler la source de données au niveau du deuxième dispositif.

4. Procédé selon l'une quelconque des revendications 1 à 3, dans lequel l'au moins un message de commande est envoyé en tant que partie d'un protocole de perforation dit Hole Punching.

5. Procédé selon la revendication 4, dans lequel le premier dispositif (110) est situé derrière un dispositif de traduction d'adresse de réseau (151), le premier dispositif (110) échangeant au moins un message avec le dispositif de traduction d'adresse de réseau (151) associé en tant que partie du protocole Hole Punching.

6. Procédé selon l'une quelconque des revendications 1 à 5, dans lequel les données incluses dans l'au moins un message de commande sont incluses en tant que données de charge utile dans l'au moins un message de commande conjointement avec des informations d'adresse publique du premier dispositif.

7. Procédé selon l'une quelconque des revendications 1 à 6, dans lequel l'au moins un message de commande est envoyé pour établir le canal de données (130).

8. Procédé selon l'une quelconque des revendications 1 à 7, comprenant en outre le fait :

    de crypter les données incluses dans l'au moins un message de commande avec une clé temporaire ;
    de crypter des informations de clé identifiant la clé temporaire avec une clé supplémentaire connue uniquement du premier dispositif et du deuxième dispositif ; et
    d'envoyer les informations de clé cryptées au deuxième dispositif le long du canal de données, une fois que le canal de données a été établi, pour décrypter les données incluses dans l'au moins un message de commande au niveau du deuxième dispositif.

9. Premier dispositif (110) permettant d'envoyer des données à un deuxième dispositif (120) sur un réseau (100), le premier dispositif (110) étant destiné :

    à envoyer au moins un message de commande au deuxième dispositif (120) le long d'un canal de commande (140) avant l'établissement d'un canal de données (130) entre le premier dispositif (110) et le deuxième dispositif (120) ;

à inclure certaines données provenant d'une source de données dans l'au moins un message de commande avant l'établissement du canal de données (130) ; et

à envoyer des données restantes provenant de la source de données au deuxième dispositif (120) le long du canal de données (130) une fois que le canal de données (130) a été établi.

10. Premier dispositif selon la revendication 9, dans lequel le premier dispositif (110) est un dispositif mobile.

11. Premier dispositif selon l'une quelconque des revendications 9 et 10, destiné :

à inclure les données dans l'au moins un message de commande en tant que données de charge utile dans l'au moins un message de commande conjointement avec des informations d'adresse publique du premier dispositif.

12. Premier dispositif selon l'une quelconque des revendications 9 à 11 permettant d'envoyer l'au moins un message de commande pour établir le canal de données (130).

13. Premier dispositif selon l'une quelconque des revendications 9 à 12 destiné :

à crypter les données incluses dans l'au moins un message de commande avec une clé temporaire ;

à crypter des informations de clé identifiant la clé temporaire avec une clé supplémentaire connue uniquement du premier dispositif (110) et du deuxième dispositif (120) ; et

à envoyer les informations de clé cryptées au deuxième dispositif (120) le long du canal de données (130), une fois que le canal de données (130) a été établi, pour décrypter les données incluses dans l'au moins un message de commande au niveau du deuxième dispositif (120).

14. Support lisible par ordinateur dans un premier dispositif (110) permettant d'envoyer des données à un deuxième dispositif (120) sur un réseau (100), le support ayant, stockées sur celui-ci, des instructions lisibles par ordinateur et exécutables par ordinateur qui, lorsqu'elles sont exécutées par un processeur, amènent le processeur à exécuter les actions comprenant le fait :

d'envoyer au moins un message de commande au deuxième dispositif (120) le long d'un canal de commande (140) avant l'établissement d'un canal de données (130) entre le premier dispositif (110) et le deuxième dispositif (120) ;

d'inclure certaines données provenant d'une source de données dans l'au moins un message de commande envoyé avant l'établissement du canal de données (130) ; et

d'envoyer des données restantes provenant de la source de données au deuxième dispositif (120) le long du canal de données (130) une fois que le canal de données (130) a été établi.

15. Support lisible par ordinateur selon la revendication 14, amenant en outre le processeur à exécuter les actions comprenant le fait :

de crypter les données incluses dans l'au moins un message de commande avec une clé temporaire ;

de crypter des informations de clé identifiant la clé temporaire avec une clé supplémentaire connue uniquement du premier dispositif (110) et du deuxième dispositif (120) ; et

d'envoyer les informations de clé cryptées au deuxième dispositif (120) le long du canal de données (130), une fois que le canal de données (130) a été établi, pour décrypter les données incluses dans l'au moins un message de commande au niveau du deuxième dispositif (120).

FIG. 1

EP 2 439 905 B1

**FIG. 2A**

| | DST | SRC | MSG |
|---|---|---|---|
| 1 | $S_A(a',p')$ | $D_A(a,p)$ | STUN REQ |
| 2 | $S_A(a',p')$ | $D_A(a',p')$ | STUN REQ |
| 3 | $D_A(a',p')$ | $S_A(a',p')$ | STUN RESP $D_A(a',p')$ |
| 4 | $D_A(a,p)$ | $S_A(a',p')$ | STUN RESP $D_A(a',p')$ |
| 5 | $C_A(a',p')$ | $D_A(a,p)$ | CTRL: $D_B$, $D_A(a',p')$ |
| 6 | $C_A(a',p')$ | $D_A(a',p')$ | CTRL: $D_B$, $D_A(a',p')$ |
| 7 | $D_B(a',p')$ | $C_B(a',p')$ | CTRL: $D_B$, $D_A(a',p')$ |
| 8 | $D_B(a,p)$ | $C_B(a',p')$ | CTRL: $D_B$, $D_A(a',p')$ |
| 9 | $S_B(a',p')$ | $D_B(a,p)$ | STUN REQ |
| 10 | $S_B(a',p')$ | $D_B(a',p')$ | STUN REQ |
| 11 | $D_B(a',p')$ | $S_B(a',p')$ | STUN RESP $D_B(a',p')$ |
| 12 | $D_B(a,p)$ | $S_B(a',p')$ | STUN RESP $D_B(a',p')$ |
| 13 | $C_B(a',p')$ | $D_B(a,p)$ | CTRL: $D_A$, $D_B(a',p')$ |
| 14 | $C_B(a',p')$ | $D_B(a',p')$ | CTRL: $D_A$, $D_B(a',p')$ |
| 15 | $D_A(a',p')$ | $C_A(a',p')$ | CTRL: $D_A$, $D_B(a',p')$ |
| 16 | $D_A(a,p)$ | $C_A(a',p')$ | CTRL: $D_A$, $D_B(a',p')$ |
| 17A | $D_B(a',p')$ | $D_A(a,p)$ | CONNECTIVITY CHECK |
| 17B | $D_A(a',p')$ | $D_B(a,p)$ | CONNECTIVITY CHECK |
| 17'A | $D_B(a',p')$ | $D_A(a,p)$ | CONNECTIVITY CHECK |
| 17'B | $D_A(a',p')$ | $D_B(a,p)$ | CONNECTIVITY CHECK |
| 18A | $D_B(a',p')$ | $D_A(a',p')$ | CONNECTIVITY CHECK |
| 18B | $D_A(a',p')$ | $D_B(a',p')$ | CONNECTIVITY CHECK |
| 18'A | $D_B(a',p')$ | $D_A(a',p')$ | CONNECTIVITY CHECK |
| 18'B | $D_A(a',p')$ | $D_B(a',p')$ | CONNECTIVITY CHECK |
| 19'A | $D_B(a,p)$ | $D_A(a',p')$ | CONNECTIVITY CHECK |
| 19'B | $D_A(a,p)$ | $D_B(a',p')$ | CONNECTIVITY CHECK |
| 20A | $D_A(a',p')$ | $D_B(a,p)$ | CONNECTIVITY RESPONSE |
| 20B | $D_B(a',p')$ | $D_A(a,p)$ | CONNECTIVITY RESPONSE |
| 21A | $D_A(a',p')$ | $D_B(a',p')$ | CONNECTIVITY RESPONSE |
| 21B | $D_B(a',p')$ | $D_A(a',p')$ | CONNECTIVITY RESPONSE |
| 22A | $D_A(a,p)$ | $D_B(a',p')$ | CONNECTIVITY RESPONSE |
| 22B | $D_B(a,p)$ | $D_A(a',p')$ | CONNECTIVITY RESPONSE |
| z | $D_B(a',p')$ | $D_A(a,p)$ | DATA |
| z' | $D_B(a',p')$ | $D_A(a',p')$ | DATA |
| z" | $D_B(a,p)$ | $D_A(a',p')$ | DATA |

# FIG. 2B

**FIG. 3A**

EP 2 439 905 B1

| | DST | SRC | MSG |
|---|---|---|---|
| 1 | $S_A(a',p')$ | $D_A(a,p)$ | STUN REQ |
| 2 | $S_A(a',p')$ | $D_A(a',p')$ | STUN REQ |
| 3 | $D_A(a',p')$ | $S_A(a',p')$ | STUN RESP $D_A(a',p')$ |
| 4 | $D_A(a,p)$ | $S_A(a',p')$ | STUN RESP $D_A(a',p')$ |
| 35 | $C_A(a',p')$ | $D_A(a,p)$ | CTRL: $D_B$, $D_A(a',p')$,DATA |
| 35' | $C_A(a',p')$ | $D_A(a,p)$ | CTRL: DATA |
| 36 | $C_A(a',p')$ | $D_A(a',p')$ | CTRL: $D_B$, $D_A(a',p')$,DATA |
| 36' | $C_A(a',p')$ | $D_A(a',p')$ | CTRL: DATA |
| 37 | $D_B(a',p')$ | $C_B(a',p')$ | CTRL: $D_B$, $D_A(a',p')$,DATA |
| 37' | $D_B(a',p')$ | $C_B(a',p')$ | CTRL: DATA |
| 38 | $D_B(a,p)$ | $C_B(a',p')$ | CTRL: $D_B$, $D_A(a',p')$,DATA |
| 38' | $D_B(a,p)$ | $C_B(a',p')$ | CTRL: DATA |
| 9 | $S_B(a',p')$ | $D_B(a,p)$ | STUN REQ |
| 10 | $S_B(a',p')$ | $D_B(a',p')$ | STUN REQ |
| 11 | $D_B(a',p')$ | $S_B(a',p')$ | STUN RESP $D_B(a',p')$ |
| 12 | $D_B(a,p)$ | $S_B(a',p')$ | STUN RESP $D_B(a',p')$ |
| 13 | $C_B(a',p')$ | $D_B(a,p)$ | CTRL: $D_A$, $D_B(a',p')$ |
| 14 | $C_B(a',p')$ | $D_B(a',p')$ | CTRL: $D_A$, $D_B(a',p')$ |
| 15 | $D_A(a',p')$ | $C_A(a',p')$ | CTRL: $D_A$, $D_B(a',p')$ |
| 16 | $D_A(a,p)$ | $C_A(a',p')$ | CTRL: $D_A$, $D_B(a',p')$ |
| 17A | $D_B(a',p')$ | $D_A(a,p)$ | CONNECTIVITY CHECK |
| 17B | $D_A(a',p')$ | $D_B(a,p)$ | CONNECTIVITY CHECK |
| 17'A | $D_B(a',p')$ | $D_A(a,p)$ | CONNECTIVITY CHECK |
| 17'B | $D_A(a',p')$ | $D_B(a,p)$ | CONNECTIVITY CHECK |
| 18A | $D_B(a',p')$ | $D_A(a',p')$ | CONNECTIVITY CHECK |
| 18B | $D_A(a',p')$ | $D_B(a',p')$ | CONNECTIVITY CHECK |
| 18'A | $D_B(a',p')$ | $D_A(a',p')$ | CONNECTIVITY CHECK |
| 18'B | $D_A(a',p')$ | $D_B(a',p')$ | CONNECTIVITY CHECK |
| 19A | $D_B(a,p)$ | $D_A(a',p')$ | CONNECTIVITY CHECK |
| 19B | $D_A(a,p)$ | $D_B(a',p')$ | CONNECTIVITY CHECK |
| 20A | $D_A(a',p')$ | $D_B(a,p)$ | CONNECTIVITY RESPONSE |
| 20B | $D_B(a',p')$ | $D_A(a,p)$ | CONNECTIVITY RESPONSE |
| 21A | $D_A(a',p')$ | $D_B(a',p')$ | CONNECTIVITY RESPONSE |
| 21B | $D_B(a',p')$ | $D_A(a',p')$ | CONNECTIVITY RESPONSE |
| 22A | $D_A(a,p)$ | $D_B(a',p')$ | CONNECTIVITY RESPONSE |
| 22B | $D_B(a,p)$ | $D_A(a',p')$ | CONNECTIVITY RESPONSE |
| z | $D_B(a',p')$ | $D_A(a,p)$ | DATA |
| z' | $D_B(a',p')$ | $D_A(a',p')$ | DATA |
| z" | $D_B(a,p)$ | $D_A(a',p')$ | DATA |

# FIG. 3B

START

ADD DATA PACKET(S) FROM DATA FILE TO OUTGOING CONTROL MESSAGE(S) — *415*

EXCHANGE CONTROL MESSAGE(S) TO ESTABLISH DATA CHANNEL — *420*

DATA CHANNEL ESTABLISHED ? — *430*

N

Y

SEND REMAINING DATA PACKET(S) FROM DATA FILE ACROSS DATA CHANNEL — *435*

END

# FIG. 4

FIG. 5A

|  | DST | SRC | MSG |
|---|---|---|---|
| 1 | $S_A(a',p')$ | $D_A(a,p)$ | STUN REQ |
| 2 | $S_A(a',p')$ | $D_A(a',p')$ | STUN REQ |
| 3 | $D_A(a',p')$ | $S_A(a',p')$ | STUN RESP $D_A(a',p')$ |
| 4 | $D_A(a,p)$ | $S_A(a',p')$ | STUN RESP $D_A(a',p')$ |
| 55 | $C_A(a',p')$ | $D_A(a,p)$ | CTRL: $D_B$, $D_A(a',p')$,X |
| 56 | $C_A(a',p')$ | $D_A(a',p')$ | CTRL: $D_B$, $D_A(a',p')$,X |
| 57 | $D_B(a',p')$ | $C_B(a',p')$ | CTRL: $D_B$, $D_A(a',p')$,X |
| 58 | $D_B(a,p)$ | $C_B(a',p')$ | CTRL: $D_B$, $D_A(a',p')$,X |
| 9 | $S_B(a',p')$ | $D_B(a,p)$ | STUN REQ |
| 10 | $S_B(a',p')$ | $D_B(a',p')$ | STUN REQ |
| 11 | $D_B(a',p')$ | $S_B(a',p')$ | STUN RESP $D_B(a',p')$ |
| 12 | $D_B(a,p)$ | $S_B(a',p')$ | STUN RESP $D_B(a',p')$ |
| 513 | $C_B(a',p')$ | $D_B(a,p)$ | CTRL: $D_A$, $D_B(a',p')$,Y |
| 514 | $C_B(a',p')$ | $D_B(a',p')$ | CTRL: $D_A$, $D_B(a',p')$,Y |
| 515 | $D_A(a',p'')$ | $C_A(a',p')$ | CTRL: $D_A$, $D_B(a',p')$,Y |
| 516 | $D_A(a,p)$ | $C_A(a',p')$ | CTRL: $D_A$, $D_B(a',p')$,Y |
| 17A | $D_B(a',p')$ | $D_A(a,p)$ | CONNECTIVITY CHECK |
| 17B | $D_A(a',p')$ | $D_B(a,p)$ | CONNECTIVITY CHECK |
| 17'A | $D_B(a',p')$ | $D_A(a,p)$ | CONNECTIVITY CHECK |
| 17'B | $D_A(a',p')$ | $D_B(a,p)$ | CONNECTIVITY CHECK |
| 18A | $D_B(a',p')$ | $D_A(a',p')$ | CONNECTIVITY CHECK |
| 18B | $D_A(a',p')$ | $D_B(a',p')$ | CONNECTIVITY CHECK |
| 18'A | $D_B(a',p')$ | $D_A(a',p')$ | CONNECTIVITY CHECK |
| 18'B | $D_A(a',p')$ | $D_B(a',p')$ | CONNECTIVITY CHECK |
| 19A | $D_B(a,p)$ | $D_A(a',p')$ | CONNECTIVITY CHECK |
| 19B | $D_A(a,p)$ | $D_B(a',p')$ | CONNECTIVITY CHECK |
| 20A | $D_A(a',p')$ | $D_B(a,p)$ | CONNECTIVITY RESPONSE |
| 20B | $D_B(a',p')$ | $D_A(a,p)$ | CONNECTIVITY RESPONSE |
| 21A | $D_A(a',p')$ | $D_B(a',p')$ | CONNECTIVITY RESPONSE |
| 21B | $D_B(a',p')$ | $D_A(a',p')$ | CONNECTIVITY RESPONSE |
| 22A | $D_A(a,p)$ | $D_B(a',p')$ | CONNECTIVITY RESPONSE |
| 22B | $D_B(a,p)$ | $D_A(a',p')$ | CONNECTIVITY RESPONSE |
| z | $D_B(a',p')$ | $D_A(a,p)$ | DATA |
| z' | $D_B(a',p')$ | $D_A(a',p')$ | DATA |
| z" | $D_B(a,p)$ | $D_A(a',p')$ | DATA |

## FIG. 5B

**FIG. 6A**

EP 2 439 905 B1

| | DST | SRC | MSG |
|---|---|---|---|
| 1 | $S_A(a',p')$ | $D_A(a,p)$ | STUN REQ |
| 2 | $S_A(a',p')$ | $D_A(a',p')$ | STUN REQ |
| 3 | $D_A(a',p')$ | $S_A(a',p')$ | STUN RESP $D_A(a',p')$ |
| 4 | $D_A(a,p)$ | $S_A(a',p')$ | STUN RESP $D_A(a',p')$ |
| 65 | $C_A(a',p')$ | $D_A(a,p)$ | CTRL: $D_B, D_A(a',p'),X,DATA(k')$ |
| 65' | $C_A(a',p')$ | $D_A(a,p)$ | CTRL: $DATA(k')$ |
| 66 | $C_A(a',p')$ | $D_B(a',p')$ | CTRL: $D_B, D_A(a',p'),X,DATA(k')$ |
| 66' | $C_A(a',p')$ | $D_B(a',p')$ | CTRL: $DATA(k')$ |
| 67 | $D_B(a',p')$ | $C_A(a',p')$ | CTRL: $D_B, D_A(a',p'),X,DATA(k')$ |
| 67' | $D_B(a',p')$ | $C_A(a',p')$ | CTRL: $DATA(k')$ |
| 68 | $D_B(a,p)$ | $C_B(a',p')$ | CTRL: $D_B, D_A(a',p'),X,DATA(k')$ |
| 68' | $D_B(a,p)$ | $C_B(a',p')$ | CTRL: $DATA(k')$ |
| 9 | $S_B(a',p')$ | $D_B(a,p)$ | STUN REQ |
| 10 | $S_B(a',p')$ | $D_B(a',p')$ | STUN REQ |
| 11 | $D_B(a',p')$ | $S_B(a',p')$ | STUN RESP $D_B(a',p')$ |
| 12 | $D_B(a,p)$ | $S_B(a',p')$ | STUN RESP $D_B(a',p')$ |
| 513 | $C_B(a',p')$ | $D_B(a,p)$ | CTRL: $D_A, D_B(a',p'),Y$ |
| 514 | $C_B(a',p')$ | $D_B(a',p')$ | CTRL: $D_A, D_B(a',p'),Y$ |
| 515 | $D_A(a,p)$ | $D_A(a',p')$ | CTRL: $D_A, D_B(a',p'),Y$ |
| 516 | $D_A(a,p)$ | $C_A(a',p')$ | CTRL: $D_A, D_B(a',p'),Y$ |
| 17A | $D_B(a',p')$ | $D_A(a,p)$ | CONNECTIVITY CHECK |
| 17B | $D_A(a',p')$ | $D_B(a,p)$ | CONNECTIVITY CHECK |
| 17'A | $D_B(a',p')$ | $D_A(a,p)$ | CONNECTIVITY CHECK |
| 17'B | $D_A(a',p')$ | $D_B(a,p)$ | CONNECTIVITY CHECK |
| 18A | $D_B(a',p')$ | $D_A(a',p')$ | CONNECTIVITY CHECK |
| 18B | $D_A(a',p')$ | $D_B(a',p')$ | CONNECTIVITY CHECK |
| 18'A | $D_B(a',p')$ | $D_A(a',p')$ | CONNECTIVITY CHECK |
| 18'B | $D_A(a',p')$ | $D_B(a',p')$ | CONNECTIVITY CHECK |
| 19A | $D_B(a,p)$ | $D_A(a',p')$ | CONNECTIVITY RESPONSE |
| 19B | $D_A(a,p)$ | $D_B(a',p')$ | CONNECTIVITY RESPONSE |
| 20A | $D_A(a',p')$ | $D_B(a,p)$ | CONNECTIVITY RESPONSE |
| 20B | $D_B(a',p')$ | $D_A(a,p)$ | CONNECTIVITY RESPONSE |
| 21A | $D_A(a',p')$ | $D_B(a',p')$ | CONNECTIVITY RESPONSE |
| 21B | $D_B(a',p')$ | $D_A(a',p')$ | CONNECTIVITY RESPONSE |
| 22A | $D_A(a,p)$ | $D_B(a',p')$ | CONNECTIVITY RESPONSE |
| 22B | $D_B(a,p)$ | $D_A(a',p')$ | CONNECTIVITY RESPONSE |
| 6z | $D_B(a',p')$ | $D_A(a,p)$ | DATA,k'(k) |
| 6z' | $D_B(a',p')$ | $D_A(a',p')$ | DATA,k'(k) |
| 6z" | $D_B(a,p)$ | $D_A(a',p')$ | DATA,k'(k) |

# FIG. 6B

```
                    ┌──────────────┐
                    │    START     │
                    └──────┬───────┘
                           │
                           ▼
        ┌────────────────────────────────┐
        │  ENCRYPT DATA PACKET(S) WITH    │──710
        │        TEMPORARY KEY            │
        └────────────────┬───────────────┘
                         │
                         ▼
        ┌────────────────────────────────┐
        │  ADD DATA PACKET(S) FROM        │──715
        │  DATA FILE TO OUTGOING          │
        │     CONTROL MESSAGE(S)          │
        └────────────────┬───────────────┘
                         │
                         ▼
        ┌────────────────────────────────┐
        │  EXCHANGE CONTROL MESSAGE(S) TO │──720
        │  ESTABLISH DATA CHANNEL AND     │
        │        SHARED KEY               │
        └────────────────┬───────────────┘
                         │
                         ▼
              ◇ DATA CHANNEL          N
              ◇ AND SHARED KEY  ─────────►
              ◇ ESTABLISHED?
                   730
                         │ Y
                         ▼
        ┌────────────────────────────────┐
        │  EXCHANGE ENCRYPTED KEY         │──735
        │  INFORMATION CONTAINING         │
        │       TEMPORARY KEY             │
        └────────────────┬───────────────┘
                         │
                         ▼
        ┌────────────────────────────────┐
        │  SEND REMAINING DATA PACKET(S)  │──750
        │  FROM DATA FILE ENCRYPTED BY    │
        │  SHARED KEY ACROSS DATA CHANNEL │
        └────────────────┬───────────────┘
                         │
                         ▼
                    ┌──────────────┐
                    │     END      │
                    └──────────────┘
```

**FIG. 7**

**FIG. 8**

**FIG. 9**

**REFERENCES CITED IN THE DESCRIPTION**

**Patent documents cited in the description**

- US 5239678 A
- US 4200700 A